(19) Europäisches Patentamt
European Patent Office
Office européen des brevets

(11) **EP 3 393 738 B1**

(12) **FASCICULE DE BREVET EUROPEEN**

(45) Date de publication et mention de la délivrance du brevet:
**22.07.2020 Bulletin 2020/30**

(21) Numéro de dépôt: **17829260.3**

(22) Date de dépôt: **20.12.2017**

(51) Int Cl.:
**B29B 15/12** *(2006.01)*    **B29K 101/12** *(2006.01)*

(86) Numéro de dépôt international:
**PCT/FR2017/053728**

(87) Numéro de publication internationale:
**WO 2018/115736 (28.06.2018 Gazette 2018/26)**

(54) **PROCÉDÉ DE FABRICATION D'UN MATÉRIAU FIBREUX PRÉ-IMPRÉGNÉ DE POLYMÈRE THERMOPLASTIQUE EN LIT FLUIDISE**

VERFAHREN ZUR HERSTELLUNG EINES MIT THERMOPLASTISCHEM POLYMER IN EINEM FLIESSBETT VORIMPRÄGNIERTEN FASERMATERIALS

PROCESS FOR MANUFACTURING A FIBROUS MATERIAL PREIMPREGNATED WITH THERMOPLASTIC POLYMER IN A FLUIDIZED BED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2016 FR 1663197**

(43) Date de publication de la demande:
**31.10.2018 Bulletin 2018/44**

(73) Titulaire: **Arkema France**
**92700 Colombes (FR)**

(72) Inventeurs:
• HOCHSTETTER, Gilles
94240 L'hay Les Roses (FR)
• BABEAU, Arthur, Pierre
64000 Pau (FR)
• SAVART, Thibaut
64230 Sauvagnon (FR)
• TANGUY, François
78200 Mantes-La-Jolie (FR)
• HUZE, Denis
27120 Fontaine Sous Jouy (FR)
• CAPELOT, Mathieu
27300 Bernay (FR)
• GAILLARD, Patrice
64370 Hagetaubin (FR)

(56) Documents cités:
WO-A1-2012/164014    FR-A1- 2 600 585
FR-A1- 3 017 329

• MILLER A ET AL: "IMPREGNATION TECHNIQUES FOR THERMOPLASTIC MATRIX COMPOSITES", POLYMERS AND POLYMER COMPOSITES, RAPRA TECHNOLOGY, vol. 4, no. 7, 1 janvier 1996 (1996-01-01) , pages 459-481, XP000658227, ISSN: 0967-3911

**Description**

[Domaine de l'invention]

La présente invention concerne un procédé de fabrication d'un matériau fibreux pré-imprégné de polymère thermoplastique.

Plus particulièrement, l'invention se rapporte à un procédé de fabrication d'un matériau fibreux pré-imprégné comprenant une étape d'imprégnation pour la préparation d'un matériau fibreux pré-imprégné, notamment à cœur, de porosité réduite et contrôlée, en vue de l'obtention de rubans de matériau fibreux pré-imprégné, de dimensions calibrées, directement utilisables pour la fabrication de pièces composites tridimensionnelles.

Dans la présente description, on entend par « matériau fibreux » un assemblage de fibres de renfort. Avant sa mise en forme, il se présente sous forme de mèches. Après sa mise en forme, il se présente sous forme de bandes (ou tape), ou de nappes. Lorsque les fibres de renfort sont continues, leur assemblage constitue un tissu ou un non tissé (NCF). Lorsque les fibres sont courtes, leur assemblage constitue un feutre ou un non tissé.

De tels matériaux fibreux pré-imprégnés sont notamment destinés à la réalisation de matériaux composites légers pour la fabrication de pièces mécaniques ayant une structure à trois dimensions et possédant de bonnes propriétés mécaniques, et thermiques. Lorsque les fibres sont en carbone ou que la résine est chargée d'additifs adaptés, ces matériaux fibreux sont capables d'évacuer des charges électrostatiques. Ils possèdent donc des propriétés compatibles avec la fabrication de pièces notamment dans les domaines de la mécanique, de l'aéronautique civile ou militaire, et nautique, de l'automobile, du pétrole et du gaz, en particulier l'offshore, du stockage de gaz, de l'énergie, de la santé et du médical, de l'armée et de l'armement, des sports et loisirs, et de l'électronique.

De tels matériaux fibreux pré-imprégnés sont également appelés matériaux composites. Ils comprennent le matériau fibreux, constitué des fibres de renfort, et d'une matrice constituée par le polymère d'imprégnation. Le premier rôle de cette matrice est de maintenir les fibres de renfort dans une forme compacte et de donner la forme voulue au produit final. Cette matrice assure également le transfert de charge entre les fibres et donc, conditionne la résistance mécanique du composite. Une telle matrice sert également à protéger les fibres de renfort contre l'abrasion et un environnement agressif, à contrôler l'aspect de surface et à disperser d'éventuelles charges entre les fibres. Le rôle de cette matrice est important pour la tenue à long terme du matériau composite, notamment en ce qui concerne la fatigue et le fluage.

[Art antérieur]

Une bonne qualité des pièces composites tridimensionnelles fabriquées à partir de matériaux fibreux pré-imprégnés passe notamment par une maîtrise du procédé d'imprégnation des fibres de renfort par le polymère thermoplastique.

Dans la présente description, on utilise le terme « bande » pour désigner des bandes de matériau fibreux dont la largeur est supérieure ou égale à 400mm. On utilise le terme « ruban » pour désigner des rubans de largeur calibrée et inférieure ou égale à 400mm.

Le terme « mèche » est également employé pour désigner le matériau fibreux.

Jusqu'à présent, la fabrication de bandes de matériaux fibreux renforcées par imprégnation de polymère thermoplastique ou de polymère thermodurcissable s'effectuait suivant plusieurs procédés qui dépendent notamment de la nature du polymère, du type de matériau composite final souhaité et de son domaine d'applications. Les technologies d'imprégnation par dépôt de poudre ou par extrusion en tête d'équerre de polymère fondu sont souvent utilisées pour imprégner les fibres de renfort par des polymères thermodurcissables, comme les résines époxy par exemple, tel que décrit dans le brevet WO2012/066241 A2. Ces technologies ne sont généralement pas applicables directement à l'imprégnation par des polymères thermoplastiques, en particulier ceux à haute température de transition vitreuse qui ont une viscosité à l'état fondu trop importante pour obtenir une imprégnation satisfaisante des fibres et des produits semi-finis ou finis de bonne qualité.

Un autre procédé connu d'imprégnation est le passage en continu des fibres dans une dispersion aqueuse de poudre polymère ou dispersion aqueuse de particules de polymère ou émulsion ou suspension aqueuse de polymère. On peut par exemple se référer au document EP0324680. On utilise dans ce procédé une dispersion de poudres de taille micrométrique (environ 20 $\mu$m). Après trempage dans la solution aqueuse, les fibres sont imprégnées par la poudre polymère. Le procédé implique alors une étape de séchage consistant à faire passer les fibres imprégnées dans un premier four afin d'évaporer l'eau absorbée pendant le trempage. Une étape de traitement thermique, consistant à faire passer les fibres imprégnées et séchées dans une seconde zone de chauffage, à haute température, est ensuite nécessaire pour fondre le polymère afin qu'il adhère, se répartisse et recouvre les fibres.

Le principal inconvénient de cette méthode est l'homogénéité du dépôt qui est parfois imparfaite. Un autre problème lié à ce procédé est le temps de séchage et la consommation en énergie qui affecte fortement le coût de production. En outre la granulométrie des poudres utilisées usuellement est fine (typiquement 20μm de D50 en volume) et cela augmente également le coût final du ruban ou de la nappe pré-imprégnées.

Par ailleurs, l'étape de séchage de cette méthode induit une porosité dans les fibres pré-imprégnées par évaporation de l'eau.

Le matériau fibreux pré-imprégné nécessite ensuite d'être mis en forme sous forme de rubans par exemple.

Des sociétés commercialisent des bandes de matériaux fibreux obtenues par une méthode d'imprégnation de fibres unidirectionnelles par passage des fibres, en continu, dans un bain fondu de polymère thermoplastique contenant un solvant organique tel que la benzophénone. On peut par exemple se référer au document US 4 541 884 de l'Impérial Chemical Industries. La présence du solvant organique permet notamment d'adapter la viscosité du mélange fondu et d'assurer une bonne enduction des fibres. Les fibres ainsi pré-imprégnées sont ensuite mises en forme. Elles peuvent par exemple être découpées en bandes de différentes largeurs puis disposées sous une presse, puis chauffées à une température supérieure à la température de fusion du polymère pour assurer la cohésion du matériau et notamment l'adhérence du polymère sur les fibres. Cette méthode d'imprégnation et de mise en forme permet de réaliser des pièces de structure à haute tenue mécanique.

Un des inconvénients de cette technique réside dans la température de chauffe nécessaire à l'obtention de ces matériaux. La température de fusion des polymères dépend notamment de leur nature chimique. Elle peut être relativement élevée pour des polymères de type poly(méthacrylate de méthyle) (PMMA), voire très élevée pour des polymères de type poly(sulfure de phénylène) (PPS), poly(éther éther cétone) (PEEK) ou poly(éther cétone cétone) (PEKK) par exemple. La température de chauffe peut donc monter à des températures supérieures à 250°C, et même supérieures à 350°C, températures qui sont très supérieures à la température d'ébullition et au point éclair du solvant, qui sont respectivement de 305°C et 150°C pour la benzophénone. Dans ce cas, on assiste à un départ brusque du solvant induisant une forte porosité au sein des fibres et provoquant par conséquent l'apparition de défauts dans le matériau composite. Le procédé est donc difficilement reproductible et implique des risques d'explosion mettant en danger les opérateurs. Enfin, l'utilisation de solvants organiques est à éviter pour des raisons environnementales et d'hygiène et sécurité des opérateurs.

Le document EP 0 406 067, déposé aux noms conjoints d'Atochem et de l'Etat Français, ainsi que le document EP0 201 367 décrivent quant à eux une technique d'imprégnation sur lit fluidisé de poudre de polymère. Les fibres pénètrent dans une cuve de fluidisation fermée où, en ce qui concerne EP 0 406 067, elles sont éventuellement séparées les unes des autres au moyen de galets ou de cylindres cannelés, les fibres se chargeant électrostatiquement, par frottement au contact de ces galets ou cylindres. Cette charge électrostatique permet à la poudre de polymère de se coller en surface des fibres et ainsi de les imprégner.

La demande internationale WO 2016/062896 décrit un poudrage de mèche par un procédé électrostatique en charge volontaire, par mise à la masse de la mèche et application d'une différence de potentiel entre la pointe d'un pistolet ou buses de poudrage et la mèche.

Le document WO2008/135663 décrit, dans une troisième variante, la réalisation d'un ruban de fibres imprégné. Dans ce document, le ruban de fibres est déjà préformé préalablement à l'étape d'imprégnation, sous forme d'un ruban formé de fibres maintenues ensemble par des moyens de contention. Le ruban ainsi préformé est préalablement chargé en électricité statique et plongé dans une enceinte contenant un lit fluidisé de fines particules de polymère en suspension dans l'air comprimé, de manière à revêtir le ruban d'une couche de revêtement polymère. Un tel document ne permet pas de réaliser une imprégnation d'une ou plusieurs mèches de fibres en simultané ni une mise en forme, en continu, des mèches pré-imprégnées sous forme de rubans.

Le document EP2586585 décrit lui aussi le principe d'imprégner des fibres en les passant dans un lit fluidisé de particules de polymère. En revanche, il ne décrit pas une mise en forme en continu d'une ou plusieurs mèches ainsi imprégnées, sous forme d'un ou plusieurs rubans parallèles unidirectionnels.

La demande US 2002/0197397 décrit un procédé d'imprégnation de fibres par un mélange de poudres de polymères, ledit mélange étant effectué sans compoundage préalable directement dans un lit fluidisé.

La demande internationale WO 2015/121583 décrit un procédé de fabrication d'un matériau fibreux pré-imprégné par imprégnation dudit matériau en lit fluidisé puis calandrage à chaud de ladite mèche.

Le calandrage à chaud est effectué en aval du dispositif d'imprégnation et permet d'homogénéiser la répartition du polymère et l'imprégnation des fibres. La porosité obtenue est contrôlée et reproductible mais non quantifiée.

Le brevet français FR 2600585 décrit un procédé de pré-imprégnation en lit fluidisé de mèches de fibres de verre, carbone, kevlar dont le diamètre des fibres est compris de 5 à 10 μm, avec étalement initial de ladite mèche au moyen d'un rouleau pour écarter les fibres entre elles puis passage de ladite mèche étalée dans un lit fluidisé et composé de particules de matière plastique dont le diamètre moyen est compris dans les limites correspondant au diamètre des filaments.

L'article de Miller et al. : « Imprégnation techniques for thermoplastic matrix composites » (Polymers and polymer composites, Rapra Technology, Vol. 4, N°7, 01 janvier 1996, pages 459-481) décrit différents procédés de pré-imprégnation de mèches, notamment en lit fluidisé par un polymère sous forme de poudre, sans mention du temps de séjour de la mèche dans la poudre, ni du diamètre en volume D50 des particules de poudre.

Le document EP0335186 décrit la possibilité d'utiliser une calandre ou une presse pour compacter un composite comprenant des fibres métalliques pré-imprégnées, utilisé pour la fabrication de corps moulé pour le blindage contre le rayonnement électromagnétique. Il ne décrit pas le fait d'imprégner une ou plusieurs mèches de fibres et de les mettre en forme, en continu, sous forme d'un ou plusieurs rubans parallèles unidirectionnels par calandrage à chaud.

Concernant la mise en forme des matériaux fibreux pré-imprégnés sous forme de rubans calibrés, adaptés à la fabrication de pièces composites tridimensionnelles par dépose automatique au moyen d'un robot, celle-ci est en général réalisée en post-traitement.

Ainsi, le document WO92/20521 décrit la possibilité d'imprégner une mèche de fibres en la passant dans un lit fluidisé de particules de poudre thermoplastique. Les fibres ainsi recouvertes de particules de polymère sont chauffées dans un four ou un dispositif de chauffage pour que le polymère pénètre bien et recouvre les fibres. Un post-traitement du renfort fibreux pré-imprégné obtenu, peut consister à le faire passer dans un ensemble de rouleau de polissage permettant d'améliorer l'imprégnation par la matrice encore liquide. Un ou plusieurs renforts fibreux superposés peuvent en outre être placés entre deux rouleaux de manière à former une bande. Un tel document ne permet pas de réaliser une imprégnation d'une ou plusieurs mèches de fibres et une mise en forme, en continu, des mèches pré-imprégnées sous forme d'un ou plusieurs rubans parallèles unidirectionnels.

La qualité des rubans de matériau fibreux pré-imprégné, et donc la qualité du matériau composite final, dépend non seulement de l'homogénéité de l'imprégnation des fibres et donc du contrôle et de la reproductibilité de la porosité du matériau fibreux pré-imprégné, mais également de la dimension et plus particulièrement de la largeur et de l'épaisseur des rubans finaux. Une régularité et un contrôle de ces deux paramètres dimensionnels permettent en effet d'améliorer la tenue mécanique des matériaux.

Actuellement, quel que soit le procédé utilisé pour l'imprégnation des matériaux fibreux, la fabrication de rubans de faible largeur, c'est-à-dire de largeur inférieure à 400mm, nécessite généralement une refente (c'est-à-dire une découpe) de bandes de largeur supérieure à 400 mm, encore dénommées nappes. Les rubans ainsi dimensionnés sont ensuite repris pour être déposés par un robot à l'aide d'une tête. En outre, les rouleaux de nappes ne dépassant pas une longueur de l'ordre de 1 km, les rubans obtenus après découpe ne sont en général pas suffisamment longs pour fabriquer certaines pièces composites de taille importante lors de la dépose par robot. Les rubans doivent donc être raboutés pour obtenir une longueur plus importante, créant alors des surépaisseurs. Ces surépaisseurs entrainent l'apparition d'hétérogénéités qui sont préjudiciables à l'obtention de matériaux composites de bonne qualité constituant les dites pièces composites. De plus, ces surépaisseurs nécessitent un arrêt machine et la relance du robot et donc perte de temps et de productivité.

Les techniques actuelles d'imprégnation de matériaux fibreux et de mise en forme de tels matériaux fibreux pré-imprégnés sous forme de rubans calibrés présentent donc plusieurs inconvénients. Il est par exemple difficile de chauffer de manière homogène un mélange fondu de polymères thermoplastiques dans une filière et en sortie de filière, jusqu'au cœur du matériau, ce qui altère la qualité de l'imprégnation. De plus, la différence de température existante entre les fibres et un mélange fondu de polymères au niveau de la filière d'imprégnation altère également la qualité et l'homogénéité de l'imprégnation. En outre, ce mode d'imprégnation par voie fondue ne permet pas l'obtention de fort taux de fibres ou de grandes vitesses de production à cause de la grande viscosité des résines thermoplastiques, notamment lorsqu'elles présentent des températures de transition vitreuse élevées, ce qui est nécessaire à l'obtention de matériaux composites de haute performance. L'utilisation de solvants organiques implique généralement l'apparition de défauts dans le matériau ainsi que des risques environnementaux, de santé et de sécurité en général. La mise en forme, par post-traitement à haute température du matériau fibreux pré-imprégné sous forme de bandes, reste difficile car elle ne permet pas toujours une répartition homogène du polymère au sein des fibres ce qui entraine l'obtention d'un matériau de moindre qualité, avec une porosité mal contrôlée. La refente de nappes pour l'obtention de rubans calibrés et le raboutage de ces rubans induit un coût supplémentaire de fabrication. La refente génère en outre des problèmes importants de poussières qui polluent les rubans de matériaux fibreux pré-imprégnés utilisés pour la dépose robot et peuvent entrainer des dysfonctionnements des robots et/ou des imperfections sur les composites. Ceci entraine potentiellement des coûts de réparation des robots, un arrêt de la production et la mise au rebut des produits non conformes. Enfin, lors de l'étape de refente, une quantité non négligeable de fibres est détériorée, induisant une perte de propriétés, et notamment une réduction de la résistance mécanique et de la conductivité, des rubans de matériau fibreux pré-imprégné.

Par ailleurs, l'imprégnation ne s'effectue pas toujours à cœur et si lesdits documents cités ci-dessus indiquent une imprégnation à cœur, il s'avère que la porosité obtenue est trop importante, notamment pour les applications énumérées ci-dessus.

[Problème technique]

L'invention a donc pour but de remédier au moins un des inconvénients de l'art antérieur. L'invention vise notamment à proposer un procédé de fabrication d'un matériau fibreux pré-imprégné, par une technique d'imprégnation associant un contrôle du temps de séjour dans le dispositif d'imprégnation à un contrôle de l'épanouissement dudit matériau fibreux au niveau dudit dispositif, et d'obtenir un matériau fibreux pré-imprégné présentant une imprégnation homogène des fibres, notamment à cœur, et des dimensions contrôlées, avec une porosité réduite, contrôlée et reproductible dont dépendent les performances de la pièce composite finale.

[Brève description de l'invention]

A cet effet, l'invention a pour objet un procédé de fabrication d'un matériau fibreux pré-imprégné comprenant un matériau fibreux en fibres continues et au moins une matrice polymère thermoplastique, comprenant une étape d'imprégnation, notamment à cœur, dudit matériau fibreux se présentant sous forme d'une mèche ou de plusieurs mèches parallèles par au moins une matrice polymère thermoplastique se présentant sous forme de poudre.

L'invention se rapporte également à un ruban unidirectionnel de matériau fibreux pré-imprégné, en particulier ruban enroulé sur bobine, caractérisé en ce qu'il est obtenu par un procédé tel que défini ci-dessus.

L'invention porte en outre sur une utilisation du ruban tel que défini ci-dessus dans la fabrication de pièces en trois dimensions. Ladite fabrication desdites pièces composites concerne les domaines des transports, en particulier automobile, du pétrole et du gaz, en particulier l'offshore, du stockage de gaz, aéronautique civile ou militaire, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical, de la balistique avec pièces pour arme ou missile, de la sécurité et de l'électronique. L'invention concerne également une pièce composite en trois dimensions, caractérisée en ce qu'elle résulte de l'utilisation d'au moins un ruban unidirectionnel de matériau fibreux pré-imprégné tel que défini ci-dessus.

[Description détaillée de l'invention]

L'invention a pour objet un procédé de fabrication d'un matériau fibreux pré-imprégné comprenant un matériau fibreux en fibres continues et au moins une matrice polymère thermoplastique, caractérisé en ce que ledit matériau fibreux pré-imprégné est réalisé en un ruban unique unidirectionnel ou en une pluralité de rubans parallèles unidirectionnels et en ce que ledit procédé comprend une étape d'imprégnation, en particulier à cœur et homogène, dudit matériau fibreux se présentant sous forme d'une mèche ou de plusieurs mèches parallèles par ladite au moins une matrice polymère thermoplastique se présentant sous forme de poudre, ladite étape d'imprégnation étant effectuée par voie sèche dans une cuve et le contrôle du taux de ladite au moins une matrice polymère thermoplastique dans ledit matériau fibreux étant effectué par contrôle du temps de séjour dudit matériau fibreux dans la poudre, à l'exclusion de tout procédé électrostatique en charge volontaire.

Selon l'objet de l'invention, le diamètre moyen D50 en volume des particules de poudre de polymère thermoplastique est compris de 30 à 300 $\mu$m, notamment de 50 à 200 $\mu$m, plus particulièrement de 70 à 200$\mu$m et ladite cuve comprend un lit fluidisé comprenant au moins une pièce d'embarrage, ladite étape d'imprégnation étant effectuée avec épanouissement simultané de ladite mèche ou desdites mèches entre l'entrée et la sortie dudit lit fluidisé et ladite mèche ou lesdites mèches étant en contact avec une partie ou la totalité de la surface de ladite au moins une pièce d'embarrage.

L'expression « temps de séjour dans la poudre» signifie le temps durant lequel la mèche est en contact avec ladite poudre dans le lit fluidisé.

Les Inventeurs ont trouvé de manière inattendue que le contrôle du temps de séjour dans la poudre permettait d'imprégner le matériau fibreux par la matrice polymère thermoplastique, en particulier à cœur et de manière homogène avec un taux de poudre (résine) bien contrôlé.

Le terme « homogène » signifie que l'imprégnation est uniforme et qu'il n'existe pas de diminution de la largeur des rubans ni de fibres sèches en surface du matériau fibreux pré-imprégné.

**Matrice polymère**

On entend par thermoplastique, ou polymère thermoplastique, un matériau généralement solide à température ambiante, pouvant être semi-cristallin ou amorphe, et qui se ramollit lors d'une augmentation de température, en particulier après passage de sa température de transition vitreuse (Tg) et s'écoule à plus haute température lorsqu'il est amorphe, ou pouvant présenter une fusion franche au passage de sa température dite de fusion (Tf) lorsqu'il est semi-cristallin, et qui redevient solide lors d'une diminution de température en dessous de sa température de cristallisation (pour un semi-cristallin) et en dessous de sa température de transition vitreuse (pour un amorphe).

La Tg et la Tf sont déterminées par analyse calorimétrique différentielle (DSC) selon la norme 11357-2 :2013 et 11357-3 :2013 respectivement.

Concernant le polymère de constitution de la matrice d'imprégnation du matériau fibreux, c'est avantageusement un polymère thermoplastique ou un mélange de polymères thermoplastiques. Ce polymère ou mélange de polymères thermoplastiques est broyé sous forme de poudre, afin de pouvoir l'utiliser dans un dispositif tel qu'une cuve, notamment en lit fluidisé.

Le dispositif sous forme de cuve en lit fluidisé peut être ouvert ou fermé.

De manière facultative, le polymère thermoplastique ou mélange de polymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent d'améliorer la lubrification de la matrice polymère lorsqu'elle est chauffée.

Optionnellement, ledit polymère thermoplastique comprend au moins un additif, notamment choisi parmi un catalyseur, un antioxydant, un stabilisant thermique, un stabilisant UV, un stabilisant à la lumière, un lubrifiant, une charge, un plastifiant, un agent ignifugeant, un agent nucléant, un allongeur de chaîne et un colorant ou un mélange de ceux-ci.

Selon une autre variante, le polymère thermoplastique ou mélange de polymères thermoplastiques peut en outre comprendre des polymères à cristaux liquides ou du poly(butylène téréphtalate) cyclisé, ou des mélanges en contenant, comme la résine CBT100 commercialisée par la société CYCLICS CORPORATION. Ces composés permettent notamment de fluidifier la matrice polymère à l'état fondu, pour une meilleure pénétration au cœur des fibres. Selon la nature du polymère, ou mélange de polymères thermoplastiques, utilisé pour réaliser la matrice d'imprégnation, notamment sa température de fusion, on choisira l'un ou l'autre de ces composés.

Les polymères thermoplastiques entrant dans la constitution de la matrice d'imprégnation du matériau fibreux, peuvent être choisis parmi :

- les polymères et copolymères de la famille des polyamides (PA) aliphatiques, cycloaliphatiques ou des PA semi-aromatiques (encore dénommés polyphtalamides (PPA)),
- les polyurées, en particulier aromatiques,
- les polymères et copolymères de la famille des acryliques comme les polyacrylates, et plus particulièrement le polyméthacrylate de méthyle (PMMA) ou ses dérivés
- les polymères et copolymères de la famille des polyaryléther cétones (PAEK) comme le poly(éther éther cétone) (PEEK), ou les polyaryléther cétones cétones (PAEKK) comme le poly(éther cétone cétone) (PEKK) ou leurs dérivés,
- les polyéther-imides (PEI) aromatiques,
- les polyarylsulfures, en particulier les polyphénylène sulfures (PPS),
- les polyarylsulfones, en particulier les polyphénylène sulfones (PPSU),
- les polyoléfines, en particulier le polypropylène (PP);
- l'acide polylactique (PLA),
- l'alcool polyvinylique (PVA),
- les polymères fluorés, en particulier le poly(fluorure de vinylidène) (PVDF), ou le polytétrafluoroéthylène (PTFE) ou le polychlorotrifluoroéthylène (PCTFE),

et leurs mélanges.

Avantageusement, lorsque ledit polymère thermoplastique est en mélange, il est additionné dans la cuve sous forme de poudre obtenue au préalable par « dry blend » ou compound ou directement dans la cuve sous forme de « dry blend ».

Avantageusement, il est additionné sous forme de poudre obtenue au préalable par « dry blend » ou directement dans la cuve sous forme de « dry blend » et le mélange est un mélange de PEKK et de PEI.

Avantageusement, lorsque ledit polymère est un mélange de deux polymères P1 et P2, la proportion en poids de polymère P1 et P2 est comprise de 1-99% à 99-1%.

Avantageusement, le mélange PEKK/PEI est compris de 90-10% à 60-40% en poids, en particulier de 90-10% à 70-30% en poids.

Le polymère thermoplastique peut correspondre au polymère final non réactif qui imprégnera le matériau fibreux ou à un prépolymère réactif, qui imprégnera également le matériau fibreux, mais est susceptible de réagir sur lui-même ou avec un autre prépolymère, en fonction des fins de chaîne portées par ledit prépolymère, après imprégnation, ou encore avec un allongeur de chaîne et notamment lors d'un chauffage au niveau d'une calandre chauffante.

Selon une première possibilité, ledit prépolymère peut comprendre ou être constituée de, au moins un prépolymère (polyamide) réactif porteur sur la même chaîne (c'est-à-dire sur le même prépolymère), de deux fonctions terminales X' et Y' fonctions respectivement coréactives entre elles par condensation, plus particulièrement avec X' et Y' étant amine et carboxy ou carboxy et amine respectivement. Selon une deuxième possibilité, ledit prépolymère peut comprendre ou être constituée de, au moins deux prépolymères polyamides réactifs entre eux et porteurs chacun respectivement de deux fonctions terminales X' ou Y', identiques (identiques pour même prépolymère et différentes entre les deux prépolymères), ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement.

Selon une troisième possibilité, ledit prépolymère peut comprendre ou être constituée de, au moins un prépolymère dudit polymère polyamide thermoplastique, porteur de n fonctions réactives terminales X, choisies parmi : -NH2, -CO2H et -OH, de préférence NH2 et -CO2H avec n étant 1 à 3, de préférence de 1 à 2, plus préférentiellement 1 ou 2, plus particulièrement 2 et au moins un allongeur de chaîne Y-A'-Y, avec A' étant un biradical hydrocarboné, de structure non polymère, porteur de 2 fonctions réactives terminales Y identiques, réactives par polyaddition avec au moins une fonction X dudit prépolymère a1), de préférence de masse moléculaire inférieure à 500, plus préférentiellement inférieure à 400.

La masse moléculaire moyenne en nombre Mn dudit polymère final de la matrice thermoplastique est de préférence dans une plage allant de 10000 à 40000, de préférence de 12000 à 30000. Ces valeurs Mn peuvent correspondre à des viscosités inhérentes supérieures ou égales à 0,8 telle que déterminées dans le m-crésol selon la norme ISO 307:2007 mais en changeant le solvant (utilisation du m-crésol à la place de l'acide sulfurique et la température étant de 20°C).

Lesdits prépolymères réactifs selon les deux options citées plus haut, ont une masse moléculaire moyenne en nombre Mn allant de 500 à 10000, de préférence de 1000 à 6000, en particulier de 2500 à 6000.

Les Mn sont déterminées en particulier par le calcul à partir du taux des fonctions terminales déterminé par titration potentiométrique en solution et la fonctionnalité desdits prépolymères. Les masses Mn peuvent également être déterminées par chromatographie d'exclusion stérique ou par RMN.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Le polyamide peut être un homopolyamide ou un copolyamide ou un mélange de ceux-ci.

Avantageusement, les polymères de constitution de la matrice sont choisis parmi les Polyamides (PA), en particulier choisis parmi les polyamides aliphatiques, notamment le PA11 et le PA12, les polyamides cycloaliphatiques, et les polyamides semi-aromatiques (polyphthalamides) éventuellement modifiés par des motifs urées, et leur copolymères, le Polyméthacrylate de méthyle (PPMA) et ses copolymères, les Polyether imides (PEI), le Poly(sulfure de phénylène) (PPS), le Poly(sulfone de phénylène) (PPSU), le Polyethercétonecétone (PEKK), le Polyetherethercétone (PEEK), les polymères fluorés comme le poly(fluorure de vinylidène) (PVDF).

Pour les polymères fluorés, on peut utiliser un homopolymère du fluorure de vinylidène (VDF de formule $CH_2=CF_2$) ou un copolymère du VDF comprenant en poids au moins 50% en masse de VDF et au moins un autre monomère copolymérisable avec le VDF. La teneur en VDF doit être supérieure à 80% en masse, voire mieux 90% en masse, pour assurer une bonne résistance mécanique à la pièce de structure, surtout lorsqu'elle est soumise à des contraintes thermiques et chimiques. Le comonomère peut être un monomère fluoré tel que par exemple le fluorure de vinyle.

Pour des pièces de structure devant résister à des températures élevées, outre les polymères fluorés, on utilise avantageusement selon l'invention les PAEK (PolyArylEtherKetone) tels que les polyéther cétones PEK, le poly(éther éther cétone) PEEK, le poly(éther cétone cétone) PEKK, le Poly(éther cétone éther cétone cétone) PEKEKK ou les PA de haute température de transition vitreuse Tg).

Avantageusement, ledit polymère thermoplastique est un polymère dont la température de transition vitreuse est telle que Tg≥ 80°C ou un polymère semi-cristallin dont la température de fusion Tf ≥ 150°C.

Avantageusement, ledit polymère thermoplastique est :

- un polyamide aliphatique choisi parmi le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), ou un mélange de ceux-ci ou un copolyamide de ceux-ci,
- un polyamide semi-aromatique, éventuellement modifié par des unités urées, notamment un polyamide semi-aromatique de formule X/YAr, tel que décrits dans EP1505099, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques.;

X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18, notamment un polyamide de formule A/6T, A/9T, A/10T ou A/11T, A étant tel que défini ci-dessus, en particulier un polyamide PA 6/6T, 66/6T, 6I/6T, MPMDT/6T, PA11/10T, 11/6T/10T, MXDT/10T ou MPMDT/10T, BACT/10T, MXD6 et MXD10 et les copolymères blocs, notamment polyamide/polyéther (PEBA).

T correspond à l'acide téréphtalique, MXD correspond à la m-xylylène diamine, MPMD correspond à la méthylpentaméthylène diamine et BAC correspond au bis(aminométhyl)cyclohexane.

**Matériau fibreux :**

Concernant les fibres de constitution dudit matériau fibreux, ce sont notamment des fibres d'origine minérale, organique ou végétale. Parmi les fibres d'origine minérale, on peut citer les fibres de carbone, les fibres de verre, les fibres de basalte, les fibres de silice, ou les fibres de carbure de silicium par exemple. Parmi les fibres d'origine organique, on peut citer les fibres à base de polymère thermoplastique ou thermodurcissable, telles que des fibres de polyamides semi-aromatiques, des fibres d'aramide ou des fibres en polyoléfines par exemple. De préférence, elles sont à base de polymère thermoplastique amorphe et présentent une température de transition vitreuse Tg supérieure à la Tg du polymère ou mélange de polymère thermoplastique de constitution de la matrice d'imprégnation lorsque ce dernier est amorphe, ou supérieure à la Tf du polymère ou mélange de polymère thermoplastique de constitution de la matrice d'imprégnation lorsque ce dernier est semi-cristallin. Avantageusement, elles sont à base de polymère thermoplastique semi-cristallin et présentent une température de fusion Tf supérieure à la Tg du polymère ou mélange de polymère thermoplastique de constitution de la matrice d'imprégnation lorsque ce dernier est amorphe, ou supérieure à la Tf du polymère ou mélange de polymère thermoplastique de constitution de la matrice d'imprégnation lorsque ce dernier est semi-cristallin. Ainsi, il n'y a aucun risque de fusion pour les fibres organiques de constitution du matériau fibreux lors de l'imprégnation par la matrice thermoplastique du composite final. Parmi les fibres d'origine végétale, on peut citer les fibres naturelles à base de lin, de chanvre, de lignine, de bambou, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice de polymère thermoplastique.

Le matériau fibreux peut également être un tissu, tressé ou tissé avec des fibres.

Il peut également correspondre à des fibres avec des fils de maintien.

Ces fibres de constitution peuvent être utilisées seules ou en mélanges. Ainsi, des fibres organiques peuvent être mélangées aux fibres minérales pour être imprégnée de polymère thermoplastique et former le matériau fibreux pré-imprégné.

Les mèches de fibres organiques peuvent avoir plusieurs grammages. Elles peuvent en outre présenter plusieurs géométries. Les fibres peuvent se présenter sous forme de fibres courtes, qui composent alors les feutres ou les non tissés pouvant se présenter sous la forme de bandes, nappes, ou morceaux, ou sous forme de fibres continues, qui composent les tissus 2D, les tresses ou mèches de fibres unidirectionnelles (UD) ou non tissées. Les fibres de constitution du matériau fibreux peuvent en outre se présenter sous forme d'un mélange de ces fibres de renfort de différentes géométries. De préférence, les fibres sont continues.

De préférence le matériau fibreux est constitué par des fibres continues de carbone, de verre ou de carbure de silicium ou leur mélange, en particulier des fibres de carbone. Il est utilisé sous forme d'une mèche ou de plusieurs mèches.

Dans les matériaux pré-imprégnés aussi appelés « prêts à l'emploi », le polymère ou mélange de polymères thermoplastiques d'imprégnation est réparti uniformément et de manière homogène autour des fibres. Dans ce type de matériau, le polymère thermoplastique d'imprégnation doit être réparti de manière la plus homogène possible au sein des fibres afin d'obtenir un minimum de porosités, c'est à dire un minimum de vides entre les fibres. En effet, la présence de porosités dans ce type de matériaux peut agir comme des points de concentrations de contraintes, lors d'une mise sous contrainte mécanique de traction par exemple, et qui forment alors des points d'initiation de rupture du matériau fibreux pré-imprégné et le fragilisent mécaniquement. Une répartition homogène du polymère ou mélange de polymères améliore donc la tenue mécanique et l'homogénéité du matériau composite formé à partir de ces matériaux fibreux pré-imprégnés.

Ainsi, dans le cas de matériaux pré-imprégnés dits « prêts à l'emploi », le taux de fibres dans ledit matériau fibreux imprégné est compris de 45 à 65 % en volume, de préférence de 50 à 60% en volume, notamment de 54 à 60% en volume.

La mesure du taux d'imprégnation peut être réalisée par analyse d'image (utilisation de microscope ou d'appareil photo ou de caméra numérique, notamment), d'une coupe transversale du ruban, en divisant la surface du ruban imprégnée par le polymère par la surface totale du produit (surface imprégnée plus surface des porosités). Afin d'obtenir une image de bonne qualité il est préférable d'enrober le ruban découpé dans son sens transversal dans une résine de polissage standard et de polir avec un protocole standard permettant l'observation de l'échantillon au microscope grossissement fois 6 au minimum.

Avantageusement, le taux de porosité dudit matériau fibreux pré-imprégné est compris de 0% et 30%, notamment de 1% à 10%, en particulier de 1% à 5%.

Le taux de porosité correspond au taux de porosité fermée et peut être déterminée soit par microscopie électronique, soit comme étant l'écart relatif entre la densité théorique et la densité expérimentale dudit matériau fibreux pré-imprégné tel que décrit dans la partie exemples de la présente invention.

**Etape d'imprégnation** :

Un exemple d'unité de mise en œuvre du procédé de fabrication est décrit dans la demande internationale WO 2015/121583 et est représenté figure 1, à l'exception de la cuve (autrement appelée cuve d'imprégnation qui dans le cas de l'invention comprend un lit fluidisé muni d'une pièce d'embarrage (figure 3) qui peut être un rouleau de compression (figure 4)).

Le rouleau de compression peut être fixe ou rotatif.

L'étape d'imprégnation du matériau fibreux est réalisée par passage d'une ou plusieurs mèches dans un dispositif d'imprégnation en continu, comprenant une cuve (20), comprenant un lit fluidisé (22) de poudre polymère.

La poudre de polymère(s) ou polymère est mise en suspension dans un gaz G (de l'air par exemple) introduit dans la cuve et circulant dans la cuve à travers une trémie 21. La ou les mèches sont mises en circulation dans ce lit fluidisé 22.

La cuve peut avoir toute forme, notamment cylindrique ou parallélépipédique, en particulier un parallélépipède rectangle ou un cube, avantageusement un parallélépipède rectangle.

La cuve peut être une cuve ouverte ou fermée. Avantageusement, elle est ouverte.

Dans le cas où la cuve est fermée, elle est alors équipée d'un système d'étanchéité pour que la poudre polymère ne puisse pas sortir de ladite cuve.

Cette étape d'imprégnation est donc effectuée par voie sèche, c'est à dire que la matrice polymère thermoplastique est sous forme de poudre, notamment en suspension dans un gaz, en particulier de l'air, mais ne peut pas être en dispersion dans un solvant ou dans l'eau.

Chaque mèche à imprégner est déroulée d'un dispositif (10) à dévidoirs (11) sous la traction engendrée par des cylindres (non représentés). De préférence, le dispositif (10) comprend une pluralité de dévidoirs (11), chaque dévidoir permettant de dérouler une mèche à imprégner. Ainsi, il est possible d'imprégner plusieurs mèches de fibres simultanément. Chaque dévidoir (11) est pourvu d'un frein (non représenté) de manière à appliquer une tension sur chaque mèche de fibres. Dans ce cas, un module d'alignement (12) permet de disposer les mèches de fibres parallèlement les unes par rapport aux autres. De cette manière les mèches de fibres ne peuvent pas être en contact les unes avec les autres, ce qui permet d'éviter une dégradation mécanique des fibres par frottement entre elles.

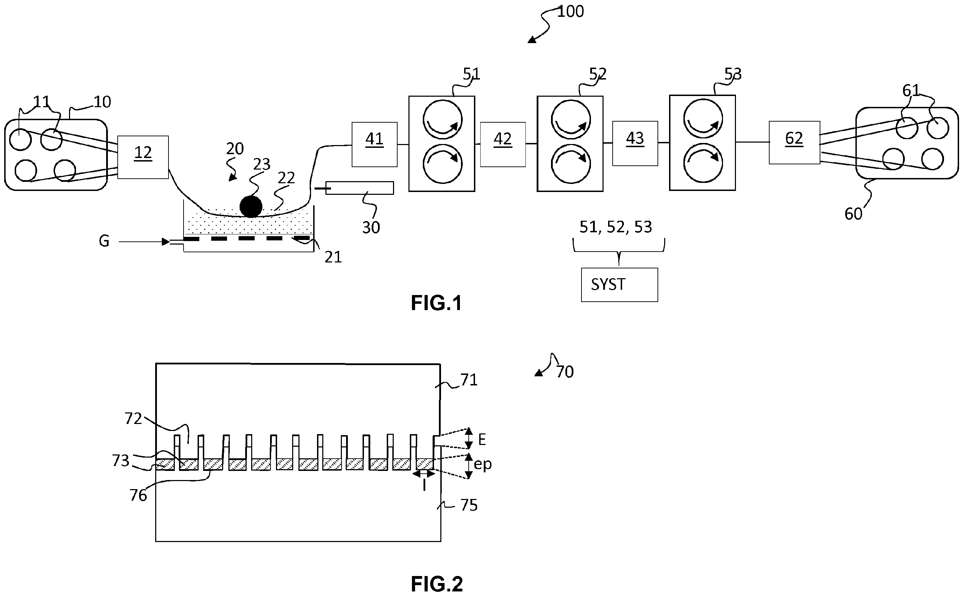

La mèche de fibres ou les mèches de fibres parallèles passent alors dans une cuve (20), comprenant en particulier un lit fluidisé (22), munie d'une pièce d'embarrage qui est un rouleau de compression (23) dans le cas de la figure 1. La mèche de fibres ou les mèches de fibres parallèles ressort(ent) ensuite de la cuve après imprégnation après contrôle du temps de séjour dans la poudre.

Les Inventeurs ont donc trouvé de manière inattendue que le contrôle du temps de séjour dans la poudre permettait d'imprégner le matériau fibreux par la matrice polymère thermoplastique, avec un taux de résine bien contrôlé et de manière homogène.

Ils ont également trouvé que grâce à l'utilisation d'au moins un embarrage l'imprégnation était améliorée par rapport aux procédés de l'art antérieur, en particulier, l'imprégnation est à cœur.

Par pièce d'embarrage, il faut entendre tout système sur lequel la mèche à la possibilité de défiler dans la cuve. La pièce d'embarrage peut avoir n'importe quelle forme à partir du moment où la mèche peut défiler dessus.

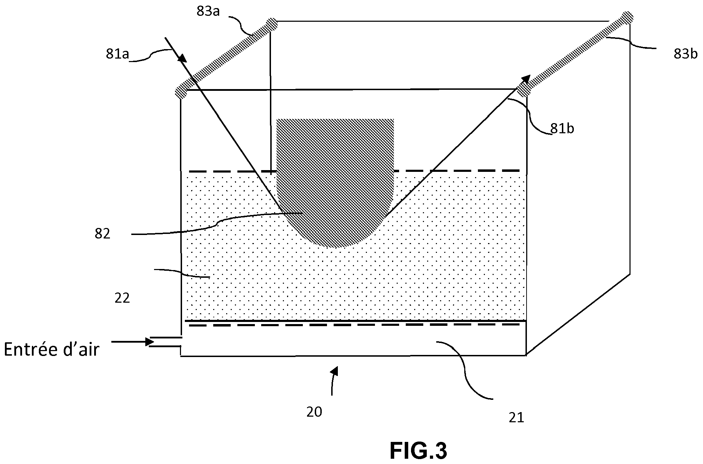

Un exemple de pièce d'embarrage, sans restreindre l'invention à celui-ci, est détaillé dans la figure 3.

Cette imprégnation est réalisée afin de permettre à la poudre polymère de pénétrer au cœur de la mèche de fibre et d'adhérer aux fibres suffisamment pour supporter le transport de la mèche poudrée hors de la cuve. La ou les mèches pré-imprégnées par la poudre, est (sont) dirigée(s) ensuite vers un dispositif de calandrage chauffant, avec possibilité de préchauffage avant calandrage et éventuel chauffage post-calandrage.

De manière facultative, cette étape d'imprégnation peut être complétée par une étape de recouvrement de la mèche ou des mèches pré-imprégnées, juste en sortie de la cuve (20) d'imprégnation par la poudre en lit fluidisé (22), et juste avant l'étape de mise en forme par calandrage. Pour cela, le sas de sortie de la cuve (20) (lit fluidisé 22) peut être connecté à un dispositif de recouvrement (30) pouvant comporter une tête d'équerre de recouvrement, comme cela est également décrit dans le brevet EP0406067. Le polymère de recouvrement peut être identique ou différent de la poudre polymère en lit fluidisé. De préférence, il est de même nature. Un tel recouvrement permet non seulement de compléter l'étape d'imprégnation des fibres pour obtenir un taux volumique final de polymère dans la gamme souhaitée et éviter la présence à la surface de la mèche pré-imprégnée, d'un taux de fibres localement trop important, qui nuirait au soudage des tapes lors de la fabrication de la pièce composite, notamment pour l'obtention de matériaux fibreux dits « prêts à l'emploi » de bonne qualité, mais également pour améliorer les performances du matériau composite obtenu.

Le procédé de l'invention comme indiqué ci-dessus est effectué par voie sèche à l'exclusion d'un procédé électrostatique en charge volontaire.

L'expression « en charge volontaire » signifie qu'une différence de potentiel est appliquée entre le matériau fibreux et la poudre. La charge est notamment contrôlée et amplifiée. Les grains de poudres imprègnent alors le matériau fibreux par attraction de la poudre chargée à l'opposé de la fibre. On peut charger électriquement, négativement ou positivement, la poudre par différents moyens (différence de potentiel entre deux électrodes métalliques, frottement mécanique sur parties métalliques etc...) et charger la fibre inversement (positivement ou négativement).

Le procédé de l'invention n'exclut pas la présence de charges électrostatiques qui pourraient apparaitre par frottement du matériau fibreux sur les éléments de l'unité de mise en œuvre avant ou au niveau de la cuve mais qui sont en tout état de cause des charges involontaires.

Avantageusement, le taux de fibres dans ledit matériau fibreux imprégné est compris de 45 à 65 % en volume, de préférence de 50 à 60% en volume, en particulier de 54 à 60% en volume.

En dessous de 45% de fibres, le renfort n'a pas d'intérêt pour ce qui concerne les propriétés mécaniques.

Au-dessus de 65%, les limites du procédé sont atteintes et les propriétés mécaniques sont reperdues.

Si le matériau fibreux, tel que la fibre de verre, présente un ensimage, une étape optionnelle de dé-ensimage peut être effectuée avant le passage du matériau fibreux dans la cuve. Le terme« ensimage » désigne les traitements de surface appliqués aux fibres de renfort en sortie de filière (ensimage textile) et sur les tissus (ensimage plastique).

L'ensimage "textile" appliqué sur les filaments, en sortie de filière consiste à déposer un agent de liaison assurant la cohésion des filaments entre eux, diminuant l'abrasion et facilitant les manipulations ultérieures (tissage, drapage, tricotage) et évitant la formation de charges électrostatiques.

L'ensimage "plastique" ou "finish" appliqué sur les tissus consiste à déposer un agent de pontage dont les rôles sont d'assurer une liaison physico-chimique entre les fibres et la résine et de protéger la fibre de son environnement.

Avantageusement, le taux de fibres dans ledit matériau fibreux imprégné est compris de 50 à 60%, en particulier de 54 à 60% % en volume.

Avantageusement, le temps de séjour dans la poudre est compris de 0,01s à 10s, préférentiellement de 0,1s à 5s, et en particulier de 0,1s à 3s.

Le temps de séjour du matériau fibreux dans la poudre est essentiel à l'imprégnation, notamment à cœur, dudit matériau fibreux.

En deçà de 0,1s, l'imprégnation n'est pas bonne à cœur.

Au-delà de 10s, le taux de matrice polymère imprégnant le matériau fibreux est trop important et les propriétés mécaniques du matériau fibreux pré-imprégné seront mauvaises.

Avantageusement, la cuve utilisée dans le procédé de l'invention comprend un lit fluidisé et ladite étape d'imprégnation est effectuée avec épanouissement simultané de ladite mèche ou desdites mèches entre l'entrée et la sortie dudit lit fluidisé.

L'expression « entrée du lit fluidisé » correspond à la tangente verticale du bord de la cuve qui comprend le lit fluidisé.

L'expression « sortie du lit fluidisé » correspond à la tangente verticale de l'autre bord de la cuve qui comprend le lit fluidisé.

En fonction de la géométrie de la cuve, la distance entre l'entrée et la sortie de celle-ci correspond donc au diamètre dans le cas du cylindre, au côté dans le cas d'un cube ou à la largeur ou la longueur dans le cas d'un parallélépipède rectangle. L'épanouissement consiste à singulariser au maximum chaque filament constitutif de ladite mèche des autres filaments qui l'entourent dans son plus proche espace. Il correspond à l'étalement transverse de la mèche.

En d'autres termes, l'étalement transverse ou la largeur de la mèche augmente entre l'entrée du lit fluidisé (ou de la cuve comprenant le lit fluidisé) et la sortie du lit fluidisé (ou de la cuve comprenant le lit fluidisé) et permet ainsi une imprégnation améliorée, notamment à cœur du matériau fibreux.

Le lit fluidisé peut être ouvert ou fermé, en particulier il est ouvert.

Avantageusement, le lit fluidisé comprend au moins une pièce d'embarrage, ladite mèche ou lesdites mèches étant en contact avec une partie ou la totalité de la surface de ladite au moins une pièce d'embarrage.

La figure 3 détaille une cuve (20) comprenant un lit fluidisé (22) avec une pièce d'embarrage, réglable en hauteur (82).

La mèche (81a) correspond à la mèche avant imprégnation qui est en contact avec une partie ou la totalité de la surface de ladite au moins une pièce d'embarrage et défile donc partiellement ou totalement à la surface de la pièce d'embarrage (82), ledit système (82) étant immergé dans le lit fluidisé où l'imprégnation s'effectue. Ladite mèche ressort ensuite de la cuve (81b) après contrôle du temps de séjour dans la poudre.

La dite mèche (81a) peut être en contact ou non avec le bord de la cuve (83a) qui peut être un rouleau rotatif ou fixe ou un bord parallélépipédique.

Avantageusement, la dite mèche (81a) est en contact ou non avec le bord de la cuve (83a).

Avantageusement, le bord de la cuve (83b) est un rouleau, notamment cylindrique et rotatif.

La dite mèche (81b) peut être en contact ou non avec le bord de la cuve (83b) qui peut être un rouleau, notamment cylindrique et rotatif ou fixe, ou un bord parallélépipédique.

Avantageusement, la dite mèche (81b) est en contact avec le bord de la cuve (83b). Avantageusement, le bord de la cuve (83b) est un rouleau, notamment cylindrique et rotatif.

Avantageusement, la dite mèche (81a) est en contact avec le bord de la cuve (83a) et le bord de la cuve (83b) est un rouleau, notamment cylindrique et rotatif et la dite mèche (81b) est en contact avec le bord de la cuve (83b), et le bord de la cuve (83b) est un rouleau, notamment cylindrique et rotatif.

Avantageusement, ladite pièce d'embarrage est perpendiculaire à la direction de ladite mèche ou desdites mèches.

Avantageusement, ledit épanouissement de ladite mèche ou desdites mèches est effectué au moins au niveau de ladite au moins une pièce d'embarrage.

L'épanouissement de la mèche s'effectue donc principalement au niveau de la pièce d'embarrage mais peut également s'effectuer au niveau du ou des bords de la cuve s'il y a contact entre la mèche et ledit bord.

Dans un autre mode de réalisation, ladite au moins une pièce d'embarrage est un rouleau de compression de forme convexe, concave ou cylindrique.

La forme convexe est favorable à l'épanouissement alors que la forme concave est défavorable à l'épanouissement bien qu'il s'effectue néanmoins.

L'expression « rouleau de compression » signifie que la mèche qui défile s'appuie partiellement ou totalement sur la surface dudit rouleau de compression, ce qui induit l'épanouissement de la dite mèche.

Avantageusement, ledit au moins un rouleau de compression est de forme cylindrique et le pourcentage d'épanouissement de ladite mèche ou desdites mèches entre l'entrée et la sortie dudit lit fluidisé est compris de 1% à 400%, préférentiellement entre 30% et 400% préférentiellement entre 30% et 150%, préférentiellement entre 50% et 150%.

L'épanouissement est fonction du matériau fibreux utilisé. Par exemple, l'épanouissement d'un matériau en fibre de carbone est beaucoup plus important que celui d'une fibre de lin.

L'épanouissement est aussi fonction du nombre de fibres ou filaments dans la mèche, de leur diamètre moyen et de leur cohésion de par l'ensimage.

Le diamètre dudit au moins un rouleau de compression est compris de 3 mm à 500 mm, préférentiellement de 10 mm à 100 mm, en particulier de 20 mm à 60 mm.

Au-dessous de 3 mm, la déformation de la fibre induite par le rouleau de compression est trop importante.

Avantageusement, le rouleau de compression est cylindrique et non cannelé et en particulier est métallique.

Lorsque la pièce d'embarrage est au moins un rouleau de compression, selon une première variante, un seul rouleau de compression est présent dans le lit fluidisé et ladite imprégnation est effectuée au niveau de l'angle $\alpha_1$ formé par ladite mèche ou lesdites mèches entre l'entrée dudit rouleau de compression et la tangente verticale audit rouleau de compression.

L'angle $\alpha_1$ formé par ladite mèche ou lesdites mèches entre l'entrée dudit rouleau de compression et la tangente verticale audit rouleau de compression permet la formation d'une zone dans laquelle la poudre va se concentrer conduisant ainsi à un « effet de coin » qui avec l'épanouissement simultané de la mèche par ledit rouleau de compression permet une imprégnation sur une largeur plus importante de mèche et donc une imprégnation améliorée comparée aux techniques de l'art antérieur améliorée. Le couplage avec le temps de séjour contrôlé permet alors une imprégnation à cœur.

Avantageusement, l'angle $\alpha_1$ est compris de 0 à 89°, préférentiellement 5° à 85°, préférentiellement de 5° à 45°, préférentiellement de 5° à 30°.

Néanmoins, un angle $\alpha_1$ compris de 0 à 5° est susceptible d'engendrer des risques de sollicitation mécanique, ce qui conduira à la casse des fibres et un angle $\alpha_1$ compris de 85° à 89° ne crée pas suffisamment d'effort mécanique pour créer « l'effet de coin ».

Une valeur de l'angle $\alpha_1$ égale à 0° correspond donc à une fibre verticale. Il est bien évident que la hauteur du rouleau de compression cylindrique est réglable permettant ainsi de pouvoir positionner la fibre verticalement.

On ne sortirait pas du cadre de l'invention si la paroi de la cuve était percée de manière à pouvoir permettre la sortie de la mèche.

Avantageusement, le bord de la cuve (83a) est équipé d'un rouleau, notamment cylindrique et rotatif sur lequel défile ladite mèche ou les dites mèches conduisant ainsi à un épanouissement préalable.

Avantageusement, un ou plusieurs embarrages sont présents en aval de la cuve comprenant le lit fluidisé au niveau duquel ou desquels l'épanouissement est initié.

Avantageusement, l'épanouissement est initié au niveau du ou desdits embarrages ci-dessus définis et se poursuit au niveau du bord de la cuve (83a).

L'épanouissement est alors maximum après passage au niveau du ou des rouleaux de compression.

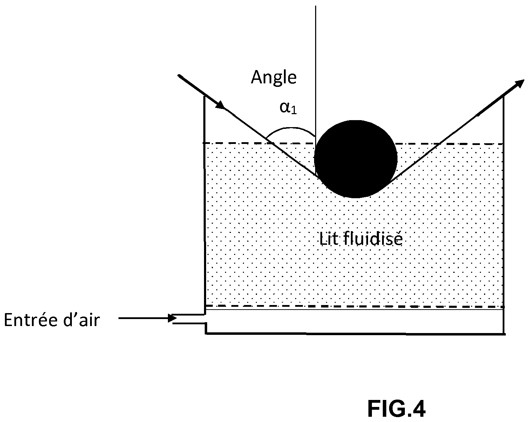

La figure 4 décrit un mode de réalisation, sans être limité à celui-ci, à un seul rouleau de compression, avec une cuve (20) comprenant un lit fluidisé (22) dans lequel un seul rouleau de compression cylindrique est présent et montrant l'angle $\alpha_1$.

Les flèches au niveau de la fibre indiquent le sens de défilement de la fibre.

Avantageusement, le niveau de ladite poudre dans ledit lit fluidisé est au moins situé à la mi-hauteur dudit rouleau de compression.

Il est bien évident que « l'effet de coin » provoqué par l'angle $\alpha_1$ favorise l'imprégnation sur une face mais l'épanouissement de ladite mèche obtenu grâce au rouleau de compression permet aussi d'avoir une imprégnation sur l'autre face de ladite mèche. Autrement dit, ladite imprégnation est favorisée sur une face de ladite mèche ou desdites mèches au niveau de l'angle $\alpha_1$ formé par ladite mèche ou lesdites mèches entre l'entrée dudit au moins un rouleau de compression $R_1$ et la tangente verticale au rouleau de compression $R_1$ mais l'épanouissement permet aussi d'imprégner l'autre face.

L'angle $\alpha_1$ est tel que défini ci-dessus.

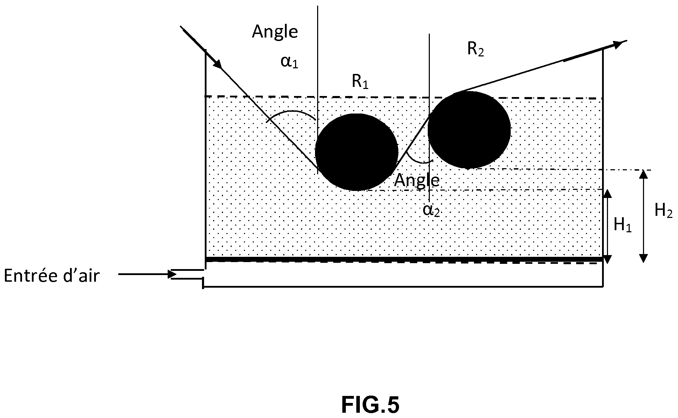

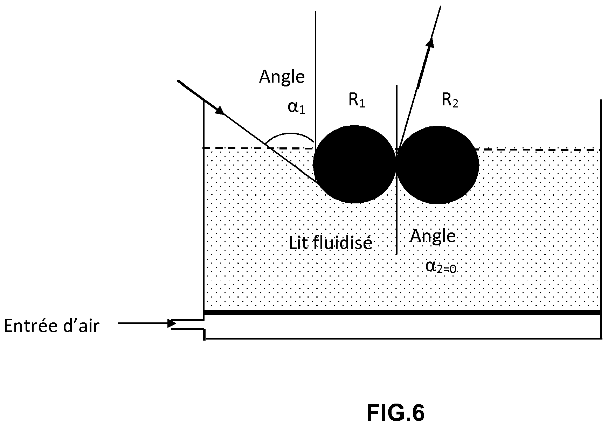

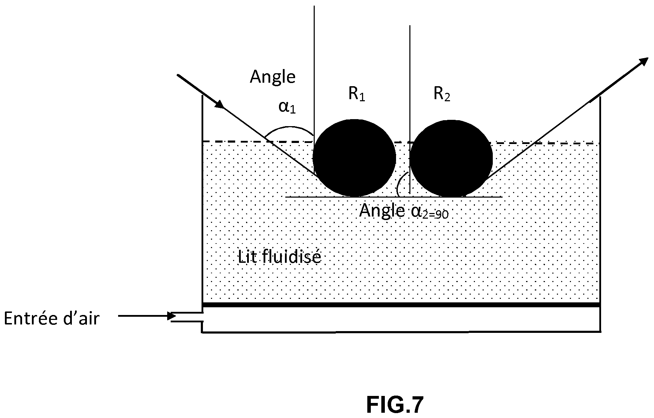

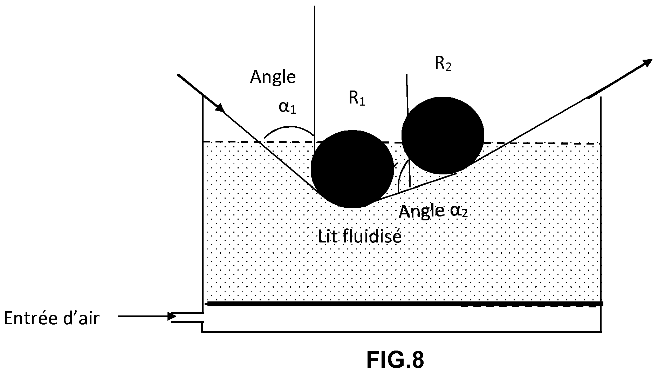

Selon une deuxième variante, lorsque la pièce d'embarrage est au moins un rouleau de compression, alors deux rouleaux de compression $R_1$ et $R_2$ sont dans ledit lit fluidisé et ladite imprégnation est effectuée au niveau de l'angle $\alpha_1$ formé par ladite mèche ou lesdites mèches entre l'entrée dudit rouleau de compression $R_1$ et la tangente verticale audit rouleau de compression $R_1$ et/ou au niveau de l'angle $\alpha_2$ formé par ladite mèche ou lesdites mèches entre l'entrée dudit rouleau de compression $R_2$ et la tangente verticale audit rouleau de compression $R_2$, ledit rouleau de compression $R_1$ précédant ledit rouleau de compression $R_2$ et ladite mèche ou lesdites mèche pouvant passer au-dessus (figure 5 et 6) ou en dessous (figure 7 et 8) du rouleau $R_2$.

Avantageusement, les deux rouleaux de compression sont de forme identique ou différente et choisie parmi une forme convexe, concave ou cylindrique. Avantageusement, les deux rouleaux de compression sont identiques et cylindriques non cannelés et en particulier métalliques.

Le diamètre des deux rouleaux de compression peut aussi être identique ou différent et est tel que défini ci-dessus.

Avantageusement, le diamètre des deux rouleaux de compression est identique.

Les deux rouleaux de compression $R_1$ et $R_2$ peuvent être au même niveau l'un par rapport à l'autre et par rapport au fond de la cuve (figures 6 et 7) ou décalés l'un par rapport à l'autre et par rapport au fond de la cuve, la hauteur du rouleau de compression $R_1$ étant supérieure ou inférieure à celle du rouleau de compression $R_2$ par rapport au fond de la cuve (figures 5 et 8).

Avantageusement, lorsque les deux rouleaux sont à des hauteurs différentes et que la mèche passe au-dessus du rouleau $R_2$, alors $\alpha_2$ est compris de 0 à 90°.

Avantageusement, ladite imprégnation s'effectue donc au niveau de l'angle $\alpha_1$ formé par ladite mèche ou lesdites mèches entre l'entrée dudit rouleau de compression $R_1$ et la tangente verticale audit rouleau de compression sur une face de ladite mèche et au niveau de l'angle $\alpha_2$ formé par ladite mèche ou lesdites mèches entre l'entrée dudit rouleau de compression $R_2$ et la tangente verticale audit rouleau de compression $R_2$ sur la face opposée de la dite mèche ce qui s'obtient en passant au-dessus du rouleau $R_2$.

Avantageusement, ladite mèche dans ce mode de réalisation est sujette à un épanouissement au niveau de chaque angle $\alpha_1$ et $\alpha_2$.

La figure 6 décrit un mode de réalisation, sans être limité à celui-ci, à deux rouleaux de compression $R_1$ et $R_2$, $R_1$ précédant $R_2$, avec une cuve (20) comprenant un lit fluidisé (22) dans lequel les deux rouleaux de compression cylindriques, au même niveau et côte à côte, sont présents et montrant le cas où ladite ou lesdites mèches ressortent entre lesdits rouleaux de compression $R_1$ et $R_2$.

Dans ce cas, l'angle $\alpha_2$ est égal à 0 et ladite ou lesdites mèches passent par-dessus le rouleau $R_2$.

Les flèches au niveau de la fibre indiquent le sens de défilement de la fibre.

De manière alternative, ladite mèche ou lesdites mèches défile(nt) en entrée entre lesdits rouleaux de compression $R_1$ et $R_2$ et ressort(ent) après avoir été en contact avec une partie ou la totalité de la surface dudit rouleau de compression $R_2$

Avantageusement, ladite mèche ou lesdites mèches est(sont) en contact en entrée avec une partie ou la totalité de la surface dudit rouleau de compression $R_1$ et ressort(ent) à l'extérieur du rouleau de compression $R_2$ après avoir été en contact avec une partie ou la totalité de la surface dudit rouleau de compression $R_2$, sous le rouleau $R_2$, l'angle $\alpha_2$ étant formé par ladite mèche ou lesdites mèches entre l'entrée dudit rouleau de compression $R_2$ et la tangente verticale audit rouleau de compression $R_2$. Dans ce cas, l'angle $\alpha_2$ = 90°.

Ladite imprégnation s'effectue donc au niveau de l'angle $\alpha_1$ formé par ladite mèche ou lesdites mèches entre l'entrée dudit rouleau de compression $R_1$ et la tangente verticale audit rouleau de compression sur une face de ladite mèche et au niveau de l'angle $\alpha_2$ formé par ladite mèche ou lesdites mèches entre l'entrée dudit rouleau de compression $R_2$ et la tangente verticale audit rouleau de compression $R_2$ sur la même face de la dite mèche mais l'épanouissement permet aussi d'imprégner l'autre face. Avantageusement, ladite mèche dans ce mode de réalisation est sujette à un épanouissement au niveau de chaque angle $\alpha_1$ et $\alpha_2$.

La figure 7 présente un exemple de mode de réalisation avec deux rouleaux de compression $R_1$ et $R_2$ au même niveau l'un par rapport à l'autre.

Selon un autre mode de réalisation de la deuxième variante, lorsque deux rouleaux de compression sont présents alors la distance entre les deux rouleaux de compression $R_1$ et $R_2$ est comprise de 0,15 mm à la longueur équivalente à la dimension maximale de la cuve, préférentiellement comprise de 10mm à 50mm et la différence de hauteur entre les deux rouleaux de compression $R_1$ et $R_2$ est comprise de 0 à la hauteur correspondant à la hauteur maximale de la cuve soustraite des diamètres des deux rouleaux de compression, préférentiellement comprise de 0,15mm à la hauteur correspondant à la hauteur maximale de la cuve soustraite des diamètres des deux rouleaux de compression, plus préférentiellement à une différence de hauteur comprise entre 10mm et 300mm, $R_2$ étant le rouleau de compression supérieur.

Avantageusement, lorsque deux rouleaux de compression sont présents et au même niveau l'un par rapport à l'autre, le niveau de ladite poudre dans ledit lit fluidisé est au moins situé à la mi-hauteur desdits deux rouleaux de compression.

La figure 8 décrit un mode de réalisation, sans être limité à celui-ci, à deux rouleaux de compression $R_1$ et $R_2$, $R_1$ précédant $R_2$, avec une cuve (20) comprenant un lit fluidisé (22) dans lequel deux rouleaux de compression cylindriques à des niveaux différents sont présents et montrant l'angle $\alpha_1$ et $\alpha_2$.

Le diamètre des rouleaux de compression $R_1$ et $R_2$ est présenté comme identique sur les figures 5, 6, 7 et 8 mais le diamètre de chaque rouleau de compression cylindrique peut être différent, le diamètre du rouleau de compression $R_1$ pouvant être supérieur ou inférieur à celui du rouleau de compression $R_2$ dans la gamme telle que définie ci-dessus.

Avantageusement, le diamètre des deux rouleaux de compression est identique.

On ne sortirait pas du cadre de l'invention si le rouleau de compression $R_1$ était supérieur au rouleau de compression $R_2$.

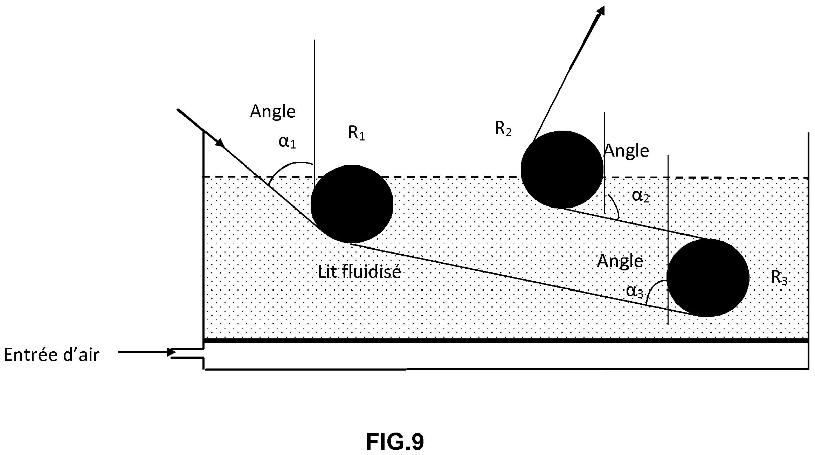

Selon une troisième variante, lorsque deux rouleaux de compression sont présents et à des niveaux différents, alors au moins un troisième rouleau de compression $R_3$ est de plus présent et situé entre les rouleaux de compression $R_1$ et $R_2$ dans le sens de la hauteur (figure 9).

Avantageusement ladite mèche ou lesdites mèches est(sont) en contact en entrée avec une partie ou la totalité de la surface dudit rouleau de compression $R_1$ puis avec une partie ou la totalité de la surface dudit rouleau de compression $R_3$ et ressort(ent) après avoir été en contact avec une partie ou la totalité de la surface dudit rouleau de compression $R_2$.

Avantageusement, ladite imprégnation est effectuée sur une face de ladite mèche ou desdites mèches au niveau de l'angle $\alpha_1$ formé par ladite mèche ou lesdites mèches entre l'entrée dudit au moins un rouleau de compression $R_1$ et la tangente verticale au rouleau de compression $R_1$ ainsi qu'au niveau de l'angle $\alpha_3$ formé par ladite mèche ou lesdites mèches et la tangente verticale au rouleau de compression $R_3$ et sur l'autre face qu'au niveau de l'angle $\alpha_2$ formé par ladite mèche ou lesdites mèches et la tangente verticale au rouleau de compression $R_2$.

Avantageusement, lorsque deux rouleaux de compression sont présents à des niveaux différents et qu'au moins un troisième rouleau de compression $R_3$ est de plus présent, alors l'angle $\alpha_2$ formé par ladite mèche ou lesdites mèches entre l'entrée dudit au moins un rouleau de compression $R_2$ et la tangente verticale audit rouleau de compression $R_2$, est compris de 180° à 45°, en particulier de 120° à 60°.

Avantageusement, l'angle $\alpha_3$ est compris de 0° à 180°, avantageusement de 45° à 135°.

La figure 9 décrit un mode de réalisation, sans être limité à celui-ci, avec une cuve (20) comprenant un lit fluidisé (22) à deux rouleaux de compression $R_1$ et $R_2$, $R_1$ précédant $R_2$, et un troisième rouleau de compression $R_3$ et montrant les angles $\alpha_1$, $\alpha_2$ et $\alpha_3$.

Le diamètre des rouleaux de compression $R_1$, $R_2$ et $R_3$ est présenté comme identique sur la figure 9 mais le diamètre de chaque rouleau de compression cylindrique peut être différent, ou deux rouleaux de compression peuvent avoir le même diamètre et le troisième un diamètre différent supérieur ou inférieur, dans la gamme telle que définie ci-dessus.

Avantageusement, le diamètre des trois rouleaux de compression est identique.

Avantageusement, dans cette troisième variante, un deuxième contrôle de l'épanouissement de ladite mèche ou desdites mèches est effectué au niveau du rouleau de compression $R_3$ et un troisième contrôle de l'épanouissement est effectué au niveau du rouleau de compression $R_3$.

Le temps de séjour dans cette troisième variante est tel que défini ci-dessus.

Avantageusement, dans cette troisième variante, le niveau de ladite poudre dans ledit lit fluidisé est au moins situé à la mi-hauteur dudit rouleau de compression $R_2$.

On ne sortirait pas du cadre de l'invention si dans cette troisième variante, ladite mèche ou lesdites mèches est(sont) en contact en entrée avec une partie ou la totalité de la surface dudit rouleau de compression $R_1$ puis avec une partie ou la totalité de la surface dudit rouleau de compression $R_2$ et ressort(ent) après avoir été en contact avec une partie ou la totalité de la surface dudit rouleau de compression $R_3$.

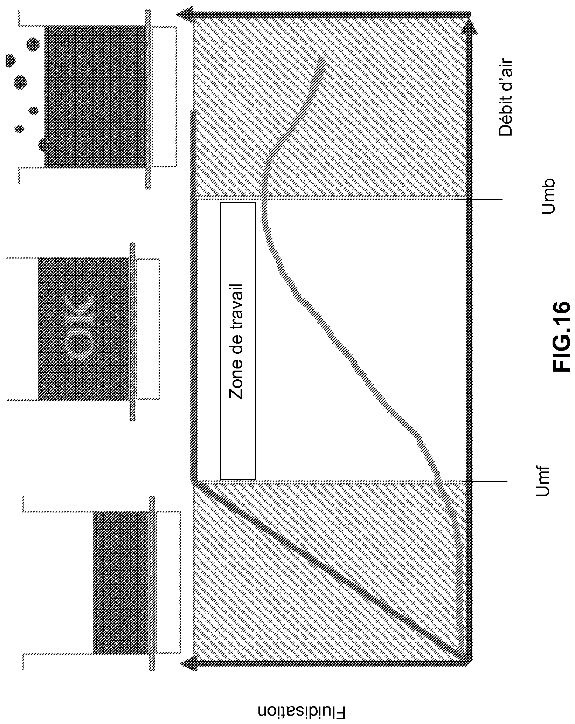

Selon un mode de réalisation avantageux, la présente invention concerne un procédé tel que ci-dessus défini caractérisé en ce qu'une seule matrice polymère thermoplastique est utilisée et la poudre de polymère thermoplastique est fluidisable. Le terme « fluidisable » signifie que le débit d'air appliqué au lit fluidisé est compris entre le débit minimum de fluidisation (Umf) et le débit minimum de bullage (Umf) tel que représenté figure 16.

En dessous du débit minimum de fluidisation, il n'y pas de fluidisation, les particules de poudre de polymère tombent dans le lit et ne sont plus en suspension et le procédé selon l'invention ne peut fonctionner.

Au-dessus du débit minimum de bullage, les particules de poudre s'envolent et la composition du lit fluidisé constante ne peut plus être maintenue constante.

Avantageusement, le diamètre en volume D90 des particules est compris 50 à 500 $\mu$m, avantageusement de 120 à 300 $\mu$m.

Avantageusement, le diamètre en volume D10 des particules est compris de 5 à 200 $\mu$m, avantageusement de 35 à 100 $\mu$m.

Avantageusement, le diamètre en volume des particules de poudre est compris dans le ratio D90/D10, soit compris de 1,5 à 50, avantageusement de 2 à 10.

Selon l'invention, le diamètre moyen D50 en volume des particules de poudre de polymère thermoplastique est compris de 30 à 300 $\mu$m, notamment de 50 à 200 $\mu$m, plus particulièrement de 70 à 200$\mu$m.

Les diamètres en volume des particules (D10, D50 et D90) sont définis selon la norme ISO 9276 :2014.

Le « D50 » correspond au diamètre moyen en volume, c'est à dire la valeur de la taille de particule qui divise la population de particules examinée exactement en deux. Le « D90 » correspond à la valeur à 90% de la courbe cumulée de la distribution granulométrique en volume.

Le « D10 » correspond à la correspond à la taille de 10% du volume des particules.

Selon un autre mode de réalisation du procédé selon l'invention, un cantre est présent avant la cuve comprenant un lit fluidisé pour le contrôle de la tension de ladite mèche ou desdites mèches à l'entrée de la cuve comprenant un lit fluidisé.

Optionnellement, dans le procédé selon l'invention, un ou plusieurs embarrages sont présents après la cuve comprenant le lit fluidisé.


## Etape de mise en forme

Dès sa (leur) sortie de la cuve (20), en particulier comprenant un lit de fluidisé (22), la mèche (les mèches parallèles) pré-imprégnée(s), éventuellement recouverte(s) d'un polymère fondu, est (sont) mise(s) en forme sous forme de ruban unique unidirectionnel ou d'une pluralité de rubans unidirectionnels parallèles, au moyen d'un dispositif de calandrage en continu comprenant une ou plusieurs calandres chauffantes.

De manière avantageuse, les calandres chauffantes du dispositif de calandrage sont couplées à des moyens de chauffage rapide qui permettent de chauffer le matériau non seulement en surface mais également à cœur.

La mèche épanouie en sortie de cuve (20) comprenant un lit fluidisé (22) se rétracte alors sous l'effet du chauffage ce qui contribue à insérer le polymère fondu entre les fibres de la mèche permettant ainsi de réduire la porosité de ladite mèche et favorisant une imprégnation, notamment à cœur de ladite mèche.

La contrainte mécanique des calandres couplée à ces moyens de chauffage rapide, permet d'éliminer la présence de porosités et de répartir de manière homogène le polymère, notamment lorsque le matériau fibreux est un matériau dit « prêt à l'emploi ».

De manière avantageuse ce calandrage à chaud permet non seulement de chauffer le polymère d'imprégnation pour qu'il pénètre, adhère et recouvre de manière uniforme les fibres, mais aussi de contrôler l'épaisseur et la largeur du ou des rubans de matériau fibreux pré-imprégné.

Pour pouvoir réaliser une pluralité de rubans parallèles unidirectionnels, c'est-à-dire autant de rubans que de mèches parallèles pré-imprégnées, passées dans le lit fluidisé, les calandres chauffantes, référencées (51), (52), (53) sur le schéma de la Figure 1, comprennent avantageusement une pluralité de gorges (73) de calandrage, en conformité avec le nombre de rubans. Ce nombre de gorges peut par exemple aller jusqu'à 200. Un système asservi SYST permet en outre de réguler la pression et/ou l'écartement E entre les rouleaux (71), (75) de la calandre (70), de manière à contrôler l'épaisseur ep des rubans. Une telle calandre (70) est schématisée sur la Figure 2 décrite ci-dessous.

Le dispositif de calandrage comprend au moins une calandre chauffante (51). De préférence, il comprend plusieurs calandres chauffantes (51), (52), (53) montée en parallèle et/ou en série par rapport au sens de défilement des mèches de fibres.

En particulier, l'étape de calandrage successif s'effectue de manière progressive avec des pressions entre les rouleaux qui sont croissantes (dans le sens de défilement du procédé) et/ou un écartement entre les rouleaux qui décroit (dans le sens de défilement du procédé).

Le fait d'avoir plusieurs calandres en série permet de compacter le matériau et réduire le taux de porosités dans le matériau et de diminuer leur taux. Cette pluralité de calandres est donc importante lorsque l'on souhaite réaliser des matériaux fibreux dits « prêts à l'emploi ».

Le fait d'avoir plusieurs calandres en parallèle permet d'augmenter le nombre de mèches pré-imprégnées.

De manière avantageuse chaque calandre du dispositif de calandrage dispose d'un système de chauffage intégré par induction ou par microondes, de préférence par microondes, afin de chauffer le polymère ou mélange de polymères thermoplastiques. De manière avantageuse, lorsque le polymère ou mélange de polymères comprend des charges carbonées, telles que du noir de carbone ou des nanocharges carbonées, de préférence choisies parmi des nanocharges carbonées, en particulier des graphènes et/ou des nanotubes de carbone et/ou des nanofibrilles de carbone ou leurs mélanges, l'effet de chauffage par induction ou par microondes est amplifié par la présence de ces charges qui conduisent alors la chaleur jusqu'au cœur du matériau.

De manière avantageuse, chaque calandre (51), (52), (53) du dispositif est couplée à un dispositif de chauffage rapide (41), (42), (43), situé avant et/ou après chaque calandre, afin de transmettre rapidement de l'énergie thermique au matériau et de parfaire l'imprégnation des fibres par le polymère fondu. Le dispositif de chauffage rapide peut par exemple être choisi parmi les dispositifs suivants : un dispositif microondes ou d'induction, un dispositif infrarouge IR ou laser ou un autre dispositif permettant un contact direct à la source de chaleur tel qu'un dispositif à une flamme ou un gaz chaud. Un dispositif microondes ou par induction est très avantageux, en particulier lorsqu'il est couplé à la présence de nanocharges carbonées dans le polymère ou mélange de polymères puisque les nanocharges carbonées amplifient l'effet de chauffage et le transmettent jusqu'au cœur du matériau.

Selon une variante de réalisation, il est en outre possible de combiner plusieurs de ces dispositifs de chauffage.

Le procédé peut en outre comprendre une étape de chauffage des mèches des fibres, avant ladite imprégnation avec, comme moyen de chauffage préféré, le chauffage par micro-ondes comme pour le système de chauffage de ladite calandre chauffante.

De manière facultative, une étape ultérieure consiste à bobiner le ou les rubans pré-imprégnés et mis en forme. Pour cela, l'unité (100) de mise en œuvre du procédé comprend un dispositif d'embobinage (60) comportant autant de bobines (61) que de rubans, une bobine (61) étant affectée à chaque ruban. Un répartiteur (62) est en général prévu pour dévier les rubans pré-imprégnés vers leurs bobines (61) respectives, tout en évitant que les rubans se touchent afin d'éviter toute dégradation. La Figure 2 schématise le détail des gorges (73) d'une calandre (70) vue en coupe. Une calandre (70) comprend un rouleau supérieur (71) et un rouleau inférieur (75). Un des rouleaux, par exemple le rouleau supérieur (71), comprend une partie crénelée (72), tandis que l'autre rouleau, c'est-à-dire le rouleau inférieur (75) dans l'exemple, comprend une partie rainurée (76), la forme des rainures étant complémentaire de la forme des parties en saillie (72) du rouleau supérieur. L'écartement E entre les rouleaux (71), (75) et/ou la pression exercée par les deux rouleaux l'un contre l'autre, permet de définir les dimensions des gorges 73), et notamment leur épaisseur ep et de largeur l. Chaque gorge (73) est prévue pour y loger une mèche de fibres qui est alors pressée et chauffée entre les rouleaux. Les mèches se transforment alors en rubans unidirectionnels parallèles dont l'épaisseur et la largeur sont calibrées par les gorges (73) des calandres. Chaque calandre comprend avantageusement une pluralité de gorges dont le nombre peut aller jusqu'à 200, de manière à réaliser autant de rubans qu'il y a de gorges et de mèches pré-imprégnées. Le dispositif de calandrage comprend en outre un dispositif central, référencé SYST sur la Figure 1, piloté par un programme d'ordinateur prévu à cet effet, qui permet de réguler simultanément la pression et/ou l'écartement des rouleaux de calandrage de toutes les calandres de l'unité 100.

Le ou les ruban(s) unidirectionnel(s) ainsi fabriqué(s) présente(nt) une largeur l et une épaisseur ep adaptées pour une dépose par robot dans la fabrication de pièces en trois dimensions, sans besoin d'être refendus à la bonne largeur. La largeur du ou des ruban(s) est avantageusement comprise entre 5 et 400mm, de préférence entre 5 et 50mm, et de manière encore plus préférée entre 5 et 15mm.

Le procédé de fabrication d'un matériau fibreux pré-imprégné qui vient d'être décrit permet donc de réaliser des matériaux fibreux pré-imprégnés avec une grande productivité, tout en permettant une imprégnation homogène des fibres et le contrôle et la reproductibilité de la porosité, permettant ainsi le contrôle et la reproductibilité des performances de l'article composite final visé. L'imprégnation homogène autour des fibres et l'absence de porosités sont assurées par l'étape d'imprégnation dans la cuve par contrôle du temps de séjour dans la dite poudre, notamment une cuve comprenant un lit fluidisé, et « effet de coin », couplé à l'épanouissement simultané de la mèche au niveau du ou des rouleaux de compression. Les matériaux obtenus sont des produits semi-finis sous forme de rubans calibrés en épaisseur et en largeur, et présentant une faible porosité.

Le procédé permet donc de réaliser des rubans calibrés de matériau fibreux pré-imprégné adaptés à la fabrication de pièces composites en trois dimensions, par dépose automatique desdits rubans au moyen d'un robot.

Avantageusement, le polymère thermoplastique du ruban obtenu avec le procédé selon l'invention est sélectionné parmi des polymères amorphes dont la température de transition vitreuse est telle que Tg≥ 80°C et/ou parmi des polymères semi-cristallins dont la température de fusion Tf est ≥ 150°C.

Avantageusement, ledit polymère thermoplastique est :

- un polyamide aliphatique choisi parmi le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), les mélanges de ceux-ci et les copolyamides de ceux-ci, en particulier 1010/11, 1010/12 etc...

- un polyamide aromatique, éventuellement modifié par des unités urées, en particulier un polyphtalamide, notamment un polyamide semi-aromatique de formule X/YAr, tel que décrits dans EP1505099, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18 ;

X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18, notamment un polyamide de formule A/6T, A/9T, A/10T ou A/11T, A étant tel que défini ci-dessus, en particulier un polyamide PA 6/6T, 66/6T, 6I/6T, PA11/10T, 11/6T/10T, MXDT/10T ou MPMDT/10T, BACT/10T l'aramide, et les copolymères blocs, notamment polyamide/polyéther (PEBA).

Avantageusement, le matériau fibreux du ruban obtenu avec le procédé selon l'invention est en fibre de carbone.

Avantageusement, le polymère thermoplastique du ruban obtenu avec le procédé selon l'invention est un polyamide semi-aromatique, notamment choisi parmi PA 11, PA 12, PA 11/1010, PA 12/1010, PA 11/10T, PA 11/6T/10T, PA MXDT/10T, PA MPMDT/10T et PA BACT/10T et le matériau fibreux du ruban obtenu avec le procédé selon l'invention est en fibre de carbone.

Avantageusement, ledit ruban dont le polymère thermoplastique est un polyamide choisi parmi PA 11, PA 12, PA 11/1010, PA 12/1010, PA 11/10T, PA 11/6T/10T, PA MXDT/10T, PA MPMDT/10T et PA BACT/10T est utilisé pour l'aéronautique civile ou militaire ou l'automobile.

Avantageusement, le polymère thermoplastique du ruban obtenu avec le procédé selon l'invention est du PEKK.

Avantageusement, le matériau fibreux du ruban obtenu avec le procédé selon l'invention est en fibre de carbone.

Avantageusement, le polymère thermoplastique du ruban obtenu avec le procédé selon l'invention est du PEKK et le matériau fibreux du ruban obtenu avec le procédé selon l'invention est en fibre de carbone.

Avantageusement, le polymère thermoplastique du ruban obtenu avec le procédé selon l'invention est du PEI.

Avantageusement, le matériau fibreux du ruban obtenu avec le procédé selon l'invention est en fibre de carbone.

Avantageusement, le polymère thermoplastique du ruban obtenu avec le procédé selon l'invention est du PEI et le matériau fibreux du ruban obtenu avec le procédé selon l'invention est en fibre de carbone.

Avantageusement, le polymère thermoplastique du ruban obtenu avec le procédé selon l'invention est un mélange de PEKK et PEI, de préférence 90-10% à 60-40% en particulier de 90-10% à 70-30% en poids.

Avantageusement, le matériau fibreux du ruban obtenu avec le procédé selon l'invention est en fibre de carbone.

Avantageusement, le polymère thermoplastique du ruban obtenu avec le procédé selon l'invention est un mélange de PEKK et PEI et le matériau fibreux du ruban obtenu avec le procédé selon l'invention est en fibre de carbone.

Selon un autre aspect, la présente invention concerne l'utilisation du ruban de matériau fibreux pré-imprégné, tel que défini ci-dessus, dans la fabrication de pièces composites en trois dimensions.

Avantageusement, ladite fabrication desdites pièces composites concerne les domaines des transports, en particulier automobile, du pétrole et du gaz, en particulier l'offshore, du stockage de gaz, aéronautique civile ou militaire, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical, de la balistique avec pièces pour arme ou missile, de la sécurité et de l'électronique.

Selon encore un autre aspect, la présente invention concerne une pièce composite en trois dimensions, caractérisée en ce qu'elle résulte de l'utilisation d'au moins un ruban unidirectionnel de matériau fibreux pré imprégné tel que défini ci-dessus.

**Modes de réalisation avantageux du procédé de l'invention**

Avantageusement, le matériau fibreux est choisi parmi la fibre de carbone et la fibre de verre.

Avantageusement, le polymère thermoplastique utilisé pour imprégner la fibre de carbone est choisi parmi un polyamide, notamment un polyamide aliphatique tel que PA 11, PA 12, PA 11/1010 ou PA 12/1010, ou un polyamide semi-aromatique, en particulier un PA 11/10T, un PA 11/6T/10T, un PA MXDT/10T ou un PA MPMDT/10T, ou PA BACT/10T, un PEKK et un PEI ou un mélange de ceux-ci.

Avantageusement, le polymère thermoplastique utilisé pour imprégner la fibre de verre est choisi parmi un polyamide, notamment un polyamide aliphatique tel que PA 11, PA 12, PA 11/1010 ou PA 12/1010, ou un polyamide semi-aromatique, en particulier un PA 11/10T, un PA 11/6T/10T, un PA MXDT/10T, un PA MPMDT/10T, ou PA BACT/10T, un PEKK et un PEI ou un mélange de ceux-ci.

Avantageusement, le taux de fibres dans ledit matériau fibreux, constitué de fibre de carbone ou de verre, imprégné est compris de 45 à 65% en volume, de préférence de 50 à 60% en volume, en particulier de 54 à 60% en volume.

Le tableau I suivant regroupe des modes de réalisation avantageux selon le procédé de l'invention effectué dans une cuve comprenant un lit fluidisé pour une mèche en fibre de carbone ou en fibre de verre avec un ou des rouleau(x) de compression cylindrique(s) non cannelés:

TABLEAU I

| Mode de réalisation n° | Matériau fibreux (fibre de ..) | Polymère | Nombre de rouleaux de compression | Temps de séjour (s) | Angle $\alpha_1$ (°) |
|---|---|---|---|---|---|
| 1 | Carbone | Polyamide | 1 | 0,1 à 5 | 5 à 85 |
| 2 | Carbone | Polyamide | 1 | 0,1 à 5 | 5 à 45 |
| 3 | Carbone | Polyamide | 1 | 0,1 à 5 | 5 à 30 |
| 4 | Carbone | Polyamide | 1 | 0,1 à 3 | 5 à 85 |
| 5 | Carbone | Polyamide | 1 | 0,1 à 3 | 5 à 45 |
| 6 | Carbone | Polyamide | 1 | 0,1 à 3 | 5 à 30 |
| 7 | Carbone | Polyamide | 2 | 0,1 à 5 | 5 à 85 |
| 8 | Carbone | Polyamide | 2 | 0,1 à 5 | 5 à 45 |
| 9 | Carbone | Polyamide | 2 | 0,1 à 5 | 5 à 30 |
| 10 | Carbone | Polyamide | 2 | 0,1 à 3 | 5 à 85 |
| 11 | Carbone | Polyamide | 2 | 0,1 à 3 | 5 à 45 |
| 12 | Carbone | Polyamide | 2 | 0,1 à 3 | 5 à 30 |
| 13 | Carbone | Polyamide | 3 | 0,1 à 5 | 5 à 85 |
| 14 | Carbone | Polyamide | 3 | 0,1 à 5 | 5 à 45 |
| 15 | Carbone | Polyamide | 3 | 0,1 à 5 | 5 à 30 |
| 16 | Carbone | Polyamide | 3 | 0,1 à 3 | 5 à 85 |
| 17 | Carbone | Polyamide | 3 | 0,1 à 3 | 5 à 45 |
| 18 | Carbone | Polyamide | 3 | 0,1 à 3 | 5 à 30 |
| 19 | Carbone | PEKK | 1 | 0,1 à 5 | 5 à 85 |
| 20 | Carbone | PEKK | 1 | 0,1 à 5 | 5 à 45 |
| 21 | Carbone | PEKK | 1 | 0,1 à 5 | 5 à 30 |
| 22 | Carbone | PEKK | 1 | 0,1 à 3 | 5 à 85 |
| 23 | Carbone | PEKK | 1 | 0,1 à 3 | 5 à 45 |
| 24 | Carbone | PEKK | 1 | 0,1 à 3 | 5 à 30 |
| 25 | Carbone | PEKK | 2 | 0,1 à 5 | 5 à 85 |
| 26 | Carbone | PEKK | 2 | 0,1 à 5 | 5 à 45 |
| 27 | Carbone | PEKK | 2 | 0,1 à 5 | 5 à 30 |
| 28 | Carbone | PEKK | 2 | 0,1 à 3 | 5 à 85 |
| 29 | Carbone | PEKK | 2 | 0,1 à 3 | 5 à 45 |
| 30 | Carbone | PEKK | 2 | 0,1 à 3 | 5 à 30 |
| 31 | Carbone | PEKK | 3 | 0,1 à 5 | 5 à 85 |
| 32 | Carbone | PEKK | 3 | 0,1 à 5 | 5 à 45 |
| 33 | Carbone | PEKK | 3 | 0,1 à 5 | 5 à 30 |

(suite)

| Mode de réalisation n° | Matériau fibreux (fibre de ..) | Polymère | Nombre de rouleaux de compression | Temps de séjour (s) | Angle $\alpha_1$ (°) |
|---|---|---|---|---|---|
| 34 | Carbone | PEKK | 3 | 0,1 à 3 | 5 à 85 |
| 35 | Carbone | PEKK | 3 | 0,1 à 3 | 5 à 45 |
| 36 | Carbone | PEKK | 3 | 0,1 à 3 | 5 à 30 |
| 37 | Carbone | PEI | 1 | 0,1 à 5 | 5 à 85 |
| 38 | Carbone | PEI | 1 | 0,1 à 5 | 5 à 45 |
| 39 | Carbone | PEI | 1 | 0,1 à 5 | 5 à 30 |
| 40 | Carbone | PEI | 1 | 0,1 à 3 | 5 à 85 |
| 41 | Carbone | PEI | 1 | 0,1 à 3 | 5 à 45 |
| 42 | Carbone | PEI | 1 | 0,1 à 3 | 5 à 30 |
| 43 | Carbone | PEI | 2 | 0,1 à 5 | 5 à 85 |
| 44 | Carbone | PEI | 2 | 0,1 à 5 | 5 à 45 |
| 45 | Carbone | PEI | 2 | 0,1 à 5 | 5 à 30 |
| 46 | Carbone | PEI | 2 | 0,1 à 3 | 5 à 85 |
| 47 | Carbone | PEI | 2 | 0,1 à 3 | 5 à 45 |
| 48 | Carbone | PEI | 2 | 0,1 à 3 | 5 à 30 |
| 49 | Carbone | PEI | 3 | 0,1 à 5 | 5 à 85 |
| 50 | Carbone | PEI | 3 | 0,1 à 5 | 5 à 45 |
| 51 | Carbone | PEI | 3 | 0,1 à 5 | 5 à 30 |
| 52 | Carbone | PEI | 3 | 0,1 à 3 | 5 à 85 |
| 53 | Carbone | PEI | 3 | 0,1 à 3 | 5 à 45 |
| 54 | Carbone | PEI | 3 | 0,1 à 3 | 5 à 30 |
| 55 | Carbone | PEI | 1 | 0,1 à 5 | 5 à 85 |
| 56 | Carbone | PEI | 1 | 0,1 à 5 | 5 à 45 |
| 57 | Carbone | PEI | 1 | 0,1 à 5 | 5 à 30 |
| 58 | Carbone | PEI | 1 | 0,1 à 3 | 5 à 85 |
| 59 | Carbone | PEI | 1 | 0,1 à 3 | 5 à 45 |
| 60 | Carbone | PEI | 1 | 0,1 à 3 | 5 à 30 |
| 61 | Carbone | PEI | 2 | 0,1 à 5 | 5 à 85 |
| 62 | Carbone | PEI | 2 | 0,1 à 5 | 5 à 45 |
| 63 | Carbone | PEI | 2 | 0,1 à 5 | 5 à 30 |
| 64 | Carbone | PEI | 2 | 0,1 à 3 | 5 à 85 |
| 65 | Carbone | PEI | 2 | 0,1 à 3 | 5 à 45 |
| 66 | Carbone | PEI | 2 | 0,1 à 3 | 5 à 30 |
| 67 | Carbone | PEI | 3 | 0,1 à 5 | 5 à 85 |
| 68 | Carbone | PEI | 3 | 0,1 à 5 | 5 à 45 |
| 69 | Carbone | PEI | 3 | 0,1 à 5 | 5 à 30 |
| 70 | Carbone | PEI | 3 | 0,1 à 3 | 5 à 85 |

(suite)

| Mode de réalisation n° | Matériau fibreux (fibre de ..) | Polymère | Nombre de rouleaux de compression | Temps de séjour (s) | Angle $\alpha_1$ (°) |
|---|---|---|---|---|---|
| 71 | Carbone | PEI | 3 | 0,1 à 3 | 5 à 45 |
| 72 | Carbone | PEI | 3 | 0,1 à 3 | 5 à 30 |
| 73 | Verre | Polyamide | 1 | 0,1 à 5 | 5 à 85 |
| 74 | Verre | Polyamide | 1 | 0,1 à 5 | 5 à 45 |
| 75 | Verre | Polyamide | 1 | 0,1 à 5 | 5 à 30 |
| 76 | Verre | Polyamide | 1 | 0,1 à 3 | 5 à 85 |
| 77 | Verre | Polyamide | 1 | 0,1 à 3 | 5 à 45 |
| 78 | Verre | Polyamide | 1 | 0,1 à 3 | 5 à 30 |
| 79 | Verre | Polyamide | 2 | 0,1 à 5 | 5 à 85 |
| 80 | Verre | Polyamide | 2 | 0,1 à 5 | 5 à 45 |
| 81 | Verre | Polyamide | 2 | 0,1 à 5 | 5 à 30 |
| 82 | Verre | Polyamide | 2 | 0,1 à 3 | 5 à 85 |
| 83 | Verre | Polyamide | 2 | 0,1 à 3 | 5 à 45 |
| 84 | Verre | Polyamide | 2 | 0,1 à 3 | 5 à 30 |
| 85 | Verre | Polyamide | 3 | 0,1 à 5 | 5 à 85 |
| 86 | Verre | Polyamide | 3 | 0,1 à 5 | 5 à 45 |
| 87 | Verre | Polyamide | 3 | 0,1 à 5 | 5 à 30 |
| 88 | Verre | Polyamide | 3 | 0,1 à 3 | 5 à 85 |
| 89 | Verre | Polyamide | 3 | 0,1 à 3 | 5 à 45 |
| 90 | Verre | Polyamide | 3 | 0,1 à 3 | 5 à 30 |
| 91 | Verre | PEKK | 1 | 0,1 à 5 | 5 à 85 |
| 92 | Verre | PEKK | 1 | 0,1 à 5 | 5 à 45 |
| 93 | Verre | PEKK | 1 | 0,1 à 5 | 5 à 30 |
| 94 | Verre | PEKK | 1 | 0,1 à 3 | 5 à 85 |
| 95 | Verre | PEKK | 1 | 0,1 à 3 | 5 à 45 |
| 96 | Verre | PEKK | 1 | 0,1 à 3 | 5 à 30 |
| 97 | Verre | PEKK | 2 | 0,1 à 5 | 5 à 85 |
| 98 | Verre | PEKK | 2 | 0,1 à 5 | 5 à 45 |
| 99 | Verre | PEKK | 2 | 0,1 à 5 | 5 à 30 |
| 100 | Verre | PEKK | 2 | 0,1 à 3 | 5 à 85 |
| 101 | Verre | PEKK | 2 | 0,1 à 3 | 5 à 45 |
| 102 | Verre | PEKK | 2 | 0,1 à 3 | 5 à 30 |
| 103 | Verre | PEKK | 3 | 0,1 à 5 | 5 à 85 |
| 104 | Verre | PEKK | 3 | 0,1 à 5 | 5 à 45 |
| 105 | Verre | PEKK | 3 | 0,1 à 5 | 5 à 30 |
| 106 | Verre | PEKK | 3 | 0,1 à 3 | 5 à 85 |
| 107 | Verre | PEKK | 3 | 0,1 à 3 | 5 à 45 |

(suite)

| Mode de réalisation n° | Matériau fibreux (fibre de ..) | Polymère | Nombre de rouleaux de compression | Temps de séjour (s) | Angle $\alpha_1$ (°) |
|---|---|---|---|---|---|
| 108 | Verre | PEKK | 3 | 0,1 à 3 | 5 à 30 |
| 109 | Verre | PEI | 1 | 0,1 à 5 | 5 à 85 |
| 110 | Verre | PEI | 1 | 0,1 à 5 | 5 à 45 |
| 111 | Verre | PEI | 1 | 0,1 à 5 | 5 à 30 |
| 112 | Verre | PEI | 1 | 0,1 à 3 | 5 à 85 |
| 113 | Verre | PEI | 1 | 0,1 à 3 | 5 à 45 |
| 114 | Verre | PEI | 1 | 0,1 à 3 | 5 à 30 |
| 115 | Verre | PEI | 2 | 0,1 à 5 | 5 à 85 |
| 116 | Verre | PEI | 2 | 0,1 à 5 | 5 à 45 |
| 117 | Verre | PEI | 2 | 0,1 à 5 | 5 à 30 |
| 118 | Verre | PEI | 2 | 0,1 à 3 | 5 à 85 |
| 119 | Verre | PEI | 2 | 0,1 à 3 | 5 à 45 |
| 120 | Verre | PEI | 2 | 0,1 à 3 | 5 à 30 |
| 121 | Verre | PEI | 3 | 0,1 à 5 | 5 à 85 |
| 122 | Verre | PEI | 3 | 0,1 à 5 | 5 à 45 |
| 123 | Verre | PEI | 3 | 0,1 à 5 | 5 à 30 |
| 124 | Verre | PEI | 3 | 0,1 à 3 | 5 à 85 |
| 125 | Verre | PEI | 3 | 0,1 à 3 | 5 à 45 |
| 126 | Verre | PEI | 3 | 0,1 à 3 | 5 à 30 |
| 127 | Verre | PEI | 1 | 0,1 à 5 | 5 à 85 |
| 128 | Verre | PEI | 1 | 0,1 à 5 | 5 à 45 |
| 129 | Verre | PEI | 1 | 0,1 à 5 | 5 à 30 |
| 130 | Verre | PEI | 1 | 0,1 à 3 | 5 à 85 |
| 131 | Verre | PEI | 1 | 0,1 à 3 | 5 à 45 |
| 132 | Verre | PEI | 1 | 0,1 à 3 | 5 à 30 |
| 133 | Verre | PEI | 2 | 0,1 à 5 | 5 à 85 |
| 134 | Verre | PEI | 2 | 0,1 à 5 | 5 à 45 |
| 135 | Verre | PEI | 2 | 0,1 à 5 | 5 à 30 |
| 136 | Verre | PEI | 2 | 0,1 à 3 | 5 à 85 |
| 137 | Verre | PEI | 2 | 0,1 à 3 | 5 à 45 |
| 138 | Verre | PEI | 2 | 0,1 à 3 | 5 à 30 |
| 139 | Verre | PEI | 3 | 0,1 à 5 | 5 à 85 |
| 140 | Verre | PEI | 3 | 0,1 à 5 | 5 à 45 |
| 141 | Verre | PEI | 3 | 0,1 à 5 | 5 à 30 |
| 142 | Verre | PEI | 3 | 0,1 à 3 | 5 à 85 |
| 143 | Verre | PEI | 3 | 0,1 à 3 | 5 à 45 |
| 144 | Verre | PEI | 3 | 0,1 à 3 | 5 à 30 |

Dans les modes de réalisation comprenant du PEKK ou du PEI, le PEKK peut être en mélange avec du PEI et le PEI peut être en mélange avec du PEKK dans les proportions ci-dessus définies.

Avantageusement, dans les compositions du tableau I ci-dessus définies dans lesquelles deux rouleaux de compression sont présents dans le lit fluidisé, le rouleau $R_2$ est au-dessus du rouleau $R_1$ par rapport au fond de la cuve, en particulier $H_2$-$H_1$ est compris de 1cm à 30cm, préférentiellement de 1 à 10cm, en particulier de 1cm à 3cm, notamment environ 2cm et l'angle $\alpha_2$ est compris de 0 à 90°, en particulier de 25 à 45°C, en particulier de 25 à 35° et la mèche passe au-dessus de $R_2$.

Ces modes de réalisation correspondent à la figure 5.

Avantageusement, dans les compositions du tableau I ci-dessus définies dans lesquelles deux rouleaux de compression sont présents dans le lit fluidisé, le rouleau $R_2$ est au-dessus du rouleau $R_1$ par rapport au fond de la cuve, en particulier $H_2$-$H_1$ est compris de 1cm à 30cm, notamment environ 2cm et l'angle $\alpha_2$ est compris de 90 à 180°C, en particulier de 115 à 135°, notamment de 115 à 125°, et la mèche passe en dessous de $R_2$.

**Description des figures**

La Figure 1 présente un schéma d'une unité de mise en œuvre du procédé de fabrication d'un matériau fibreux pré-imprégné selon l'invention.

La Figure 2 présente un schéma en coupe de deux rouleaux constitutifs d'une calandre telle qu'utilisée dans l'unité de la Figure 1.

La figure 3 détaille une cuve (20) comprenant un lit fluidisé (22) avec une pièce d'embarrage, réglable en hauteur (82). Le bord de l'entrée de la cuve est équipé d'un rouleau rotatif 83a sur lequel défile la mèche 81a et le bord de la sortie cuve est équipé d'un rouleau rotatif 83b sur lequel défile la mèche 81b.

La figure 4 présente décrit un mode de réalisation à un seul rouleau de compression, avec une cuve (20) comprenant un lit fluidisé (22) dans lequel un seul rouleau de compression cylindrique est présent et montrant l'angle $\alpha_1$.

Les flèches au niveau de la fibre indiquent le sens de défilement de la fibre.

La figure 5 présente un mode de réalisation, sans être limité à celui-ci, à deux rouleaux de compression $R_1$ et $R_2$, $R_1$ précédant $R_2$, avec une cuve (20) comprenant un lit fluidisé (22) dans lequel les deux rouleaux de compression cylindriques sont à des hauteurs différentes par rapport au fond de la cuve ($R_2$ à une hauteur $H_2$ au-dessus de $R_1$ à une hauteur $H_1$) sont présents et montrant l'angle $\alpha_1$ et $\alpha_2$.

Les flèches au niveau de la mèche de fibre indiquent le sens de défilement de la mèche.

La figure 6 présente un exemple de mode de réalisation avec une cuve (20) comprenant un lit fluidisé (22) dans lequel les deux rouleaux de compression $R_1$ et $R_2$ sont cylindriques, au même niveau l'un par rapport à l'autre et côte à côte et montrant l'angle $\alpha_1$, et l'angle $\alpha_2$ = 0° et la mèche passant entre les 2 rouleaux)

La figure 7 présente un exemple de mode de réalisation avec une cuve (20) comprenant un lit fluidisé (22) dans lequel les deux rouleaux de compression $R_1$ et $R_2$ sont cylindriques, au même niveau l'un par rapport à l'autre et côte à côte et montrant l'angle $\alpha_1$, et l'angle $\alpha_2$ = 90°et la mèche passant au-dessous de $R_2$.

La figure 8 présente un exemple de mode de réalisation avec une cuve (20) comprenant un lit fluidisé (22) dans lequel deux rouleaux de compression cylindriques $R_1$ et $R_2$, $R_1$ précédant $R_2$, à des niveaux différents sont présents et montrant l'angle $\alpha_1$ et $\alpha_2$ et la mèche passant sous le rouleau R2.

La figure 9 présente un mode de réalisation avec une cuve (20) comprenant un lit fluidisé (22) à deux rouleaux de compression $R_1$ et $R_2$, $R_1$ précédant $R_2$, et un rouleau de compression $R_3$ et montrant les angles $\alpha_1$, $\alpha_2$ et $\alpha_3$.

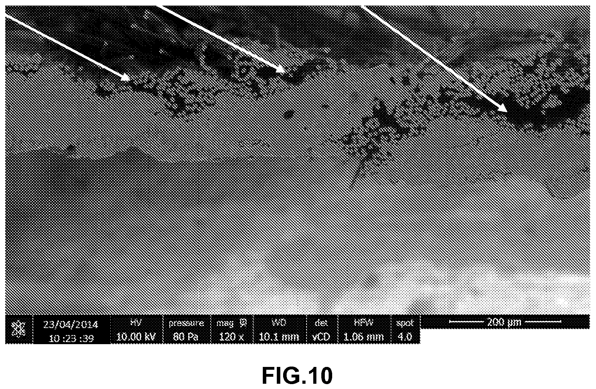

La figure 10 présente une photo prise au microscope électronique à balayage d'une vue en coupe d'une mèche de fibre de carbone ¼" Fibre carbone Toray, 12K T700S M0E imprégnée par une poudre de polyamide PA11/6T/10T de D50= 100$\mu$m selon le procédé décrit dans WO 2015/121583 (après calandrage).

Le procédé selon WO 2015/121583 fait apparaître un manque d'homogénéité à plusieurs endroits de la mèche pré-imprégnée schématisés par les flèches blanches.

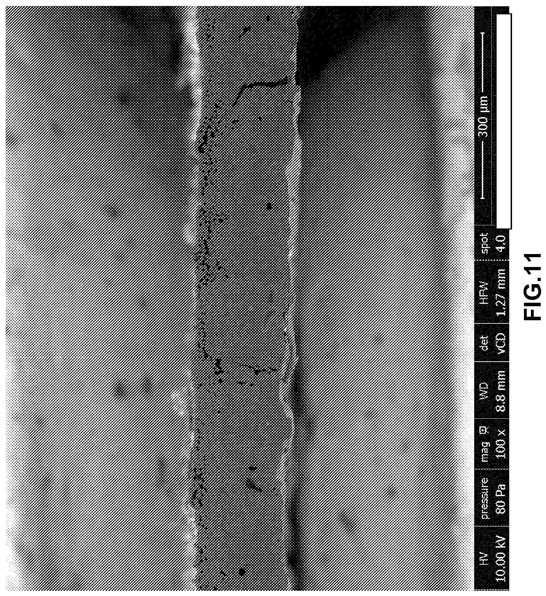

La figure 11 présente une photo prise au microscope électronique à balayage d'une vue en coupe d'une mèche de fibre de carbone ¼" (6,35mm) (fibre Toray 12K T700S M0E), imprégnée par une poudre de polyamide PA MPMDT/10T de D50 = 115$\mu$m selon le procédé de l'invention (tel que décrit dans l'exemple 2, après calandrage). L'analyse d'image donne un taux de porosité de 5 % en excluant les bords du tape.

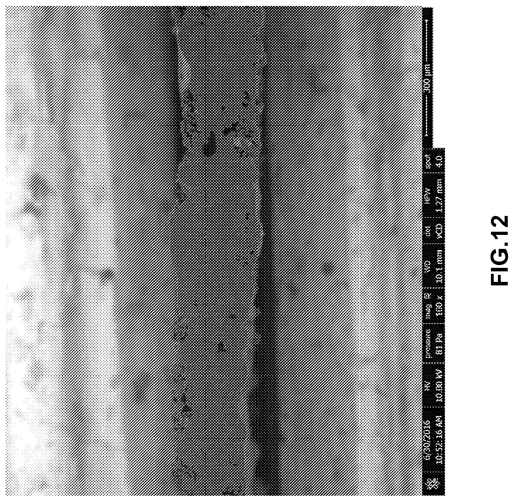

La figure 12 présente une photo prise au microscope électronique à balayage d'une vue en coupe d'une mèche de fibre de carbone ¼" (6,35mm) (fibre Toray 12K T700) imprégnée par une poudre de polyamide PA 11/6T/10T de D50= 132$\mu$m selon le procédé de l'invention (tel que décrit dans l'exemple 2, après calandrage).

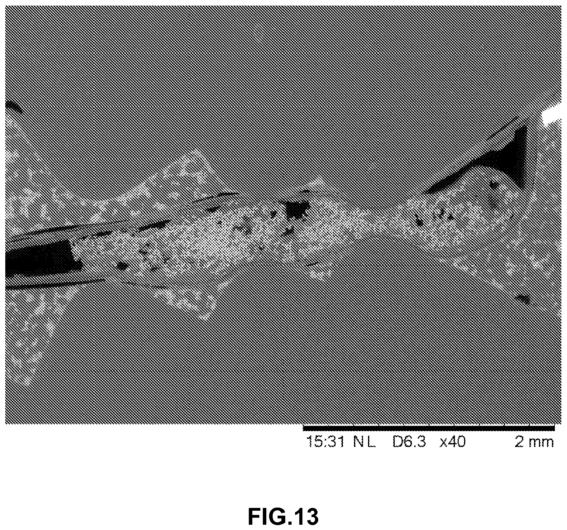

La figure 13 présente une photo prise au microscope électronique à balayage d'une vue en coupe d'une mèche de fibre de verre 3B HiPer Tex 2400 tex, imprégnée par une poudre de polyamide PA 11 de D50= 120$\mu$m selon le procédé de l'invention (tel que décrit dans l'exemple 3, avant calandrage).

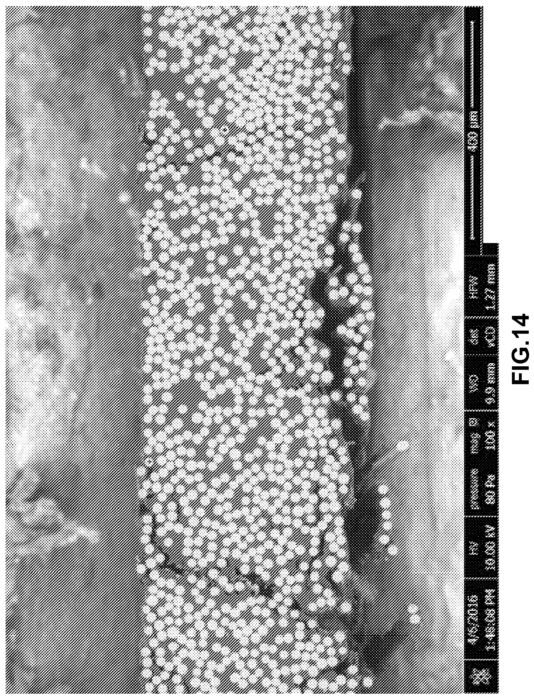

La figure 14 présente une photo prise au microscope électronique à balayage d'une vue en coupe d'une mèche de fibre de verre 3B HiPer Tex 2400 tex, imprégnée par une poudre de polyamide PA 11/6T/10T de D50= 132μm selon le procédé de l'invention (tel que décrit dans l'exemple 3, après calandrage).

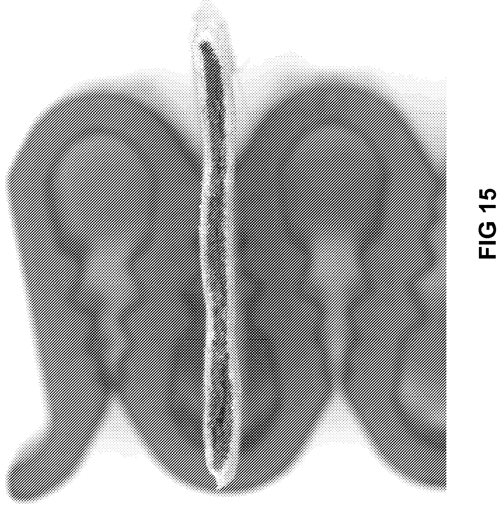

La figure 15 présente une photo prise à la binoculaire d'une vue en coupe d'une mèche de fibre de carbone ½" (12,7mm) (SGL grade AA, 50K) imprégnée par une poudre de polyamide MPMDT/10T de D50= 115μm selon le procédé de l'invention (tel que décrit dans l'exemple 4, après calandrage).

La figure 16 présente la fluidisation en fonction du débit d'air. Le débit d'air appliqué au lit fluidisé doit être compris entre le débit minimum de fluidisation (Umf) et le débit minimum de bullage (Umf)

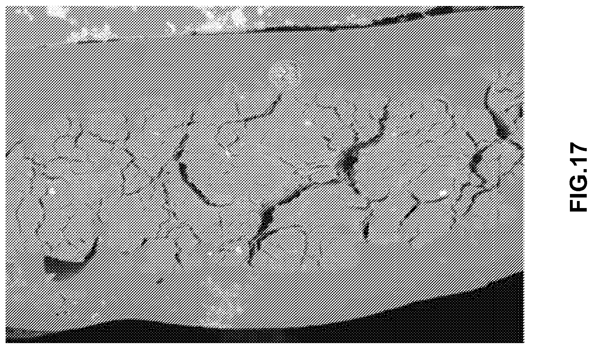

La figure 17 présente l'imprégnation de fibres de lin par du PA11 (D50 = 15 à 34μm) obtenue par voie fondue en tant qu'exemple comparatif avec le procédé de l'invention (l'exemple 3).

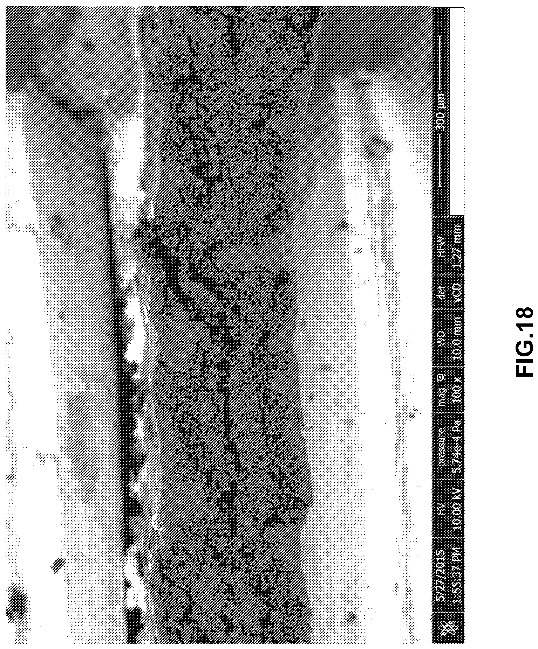

La figure 18 présente l'imprégnation de fibres de carbone Toray T700 S 24K 60E par du MPMDT/10T (D50=115μm) obtenue par voie fondue en tant qu'exemple comparatif avec le procédé de l'invention (l'exemple 3).

Les exemples suivants illustrent de façon non limitative la portée de l'invention.

### Exemple 1 (exemple comparatif):

Une mèche de fibre de carbone de 12K, a été imprégnée avec du PA 11/6T/10T tel que décrit dans WO 2015/121583.

D50=100μM.

### Résultats :

Les résultats sont présentés en figure 10 et montrent un manque d'homogénéité à plusieurs endroits de la mèche pré-imprégnée schématisés par les flèches blanches.

### Exemple 2 : mode opératoire générale d'imprégnation d'un matériau fibreux (fibre de carbone) par une poudre de polyamide en lit fluidisé avec un seul rouleau

Le mode opératoire suivant a été effectué:

- Un rouleau de compression cylindrique dans la cuve (L= 500 mm, l= 500mm, H= 600mm), diamètre 25 mm.
- Temps de séjour de 0,3 sec dans la poudre
- Angle $\alpha_1$ de 25°
- Epanouissement environ 100 % (soit une largeur multipliée par 2) pour une mèche en fibre de carbone de carbone 1/4" (6,35mm) Toray, 12K T700S M0E
- D50 =115 μm, (D10=49μm, D90= 207μm) pour la poudre de MPMDT/10T. D50 = 132 μm, (D10= 72μm et D90=225μm) pour la poudre de 11/6T/10T.
- bord de la cuve équipé d'un rouleau fixe.

Le matériau fibreux (mèche de fibre de carbone ¼") a été pré-imprégné par différents polyamides (MPMDT/10T et PA 11/6T/10T de granulométrie ci-dessus définie) selon ce mode opératoire et sont présentés dans les figures 11 et 12. La figure 11 correspond au MPMDT/10T, la figure 12 au PA 11/6T/10T.

Cela démontre l'efficacité du procédé d'imprégnation par une poudre sèche en lit fluidisé avec un rouleau de compression et contrôle du temps de séjour dans la poudre.

### Exemple 3 : mode opératoire générale d'imprégnation d'un matériau fibreux (fibre de verre) par une poudre de polyamide (PA11 et 11/6T/10T) en lit fluidisé avec un seul rouleau

Le mode opératoire suivant a été effectué:

- Un rouleau fixe de compression dans la cuve diamètre 6 mm
- Temps de séjour d'environ 5 sec
- Angle $\alpha_1$ de 45 °
- D50 de la poudre de PA11 de 120μm (D10 = 60 μm et D90=210 μm).
  D50 de la poudre de PA11/6T/10T de 132μm (D10 = 60 μm et D90=210 μm).
- Bord de la cuve équipé d'un rouleau fixe.

Le matériau fibreux (mèche de fibre de verre 2400 tex) a été pré-imprégnés par différent polyamides (PA11 et 11/6T/10T) selon ce mode opératoire et sont présentés dans les figures 13 et 14. La figure 13 correspond au PA11 et la figure 14 au PA 11/6T/10T.

Cela démontre l'efficacité du procédé d'imprégnation par une poudre sèche en lit fluidisé avec un rouleau de compression et contrôle du temps de séjour dans la poudre.

## Exemple 4 : mode opératoire générale d'imprégnation d'un matériau fibreux par une poudre de polyamide en lit fluidisé avec deux rouleaux

- Deux rouleaux de compression cylindriques à une différence de hauteur $H_2 - H_1$ = 2 cm, dans la cuve (L= 500 mm, l= 500, H= 600), ayant tous deux un diamètre 25 mm. Distance des rouleaux environ 1 cm (tels que représentés figure 5)
- Temps de séjour de 2 sec dans la poudre
- Angle $\alpha_1$ de 25° et angle $\alpha_2$ de 30°
- Epanouissement environ 100 % (soit une largeur multipliée par 2) pour une mèche en fibre de carbone 1/2" (12,7mm) SGL grade AA
- D50 de la poudre de 98.9 $\mu$m.
- bord de la cuve équipé d'un rouleau rotatif.

Le matériau fibreux (mèche de fibre de carbone ½") pré-imprégné par un polyamide MPMDT/10T a été préparé selon ce mode opératoire et est présenté dans la figure 15 (vue binoculaire).

Le taux d'imprégnation est de 40%.

Cela démontre l'efficacité du procédé d'imprégnation par une poudre sèche en lit fluidisé avec deux rouleaux de compression et contrôle du temps de séjour dans la poudre.

## Exemple 5 : Détermination du taux de porosité par analyse d'image

La porosité a été déterminée par analyse d'image sur une mèche de fibre de carbone ½" (12,7mm) imprégnée par du MPMDT/10T). Elle est de 5%.

## Exemple 6 : Détermination du taux de porosité l'écart relatif entre densité théorique et densité expérimentale (méthode générale)

a) Les données requises sont :

- La densité de la matrice thermoplastique
- La densité des fibres
- Le grammage du renfort :

  • masse linéique (g/m) par exemple pour une tape ¼ de pouce (6,35mm) (issu d'un seul rowing)
  • masse surfacique (g/m²) par exemple pour une tape plus large ou un tissu

b) Mesures à réaliser :
Le nombre d'échantillons doit être au minimum de 30 pour que le résultat soit représentatif du matériau étudié.

Les mesures à réaliser sont :

- La dimension des échantillons prélevés:

  ◦ Longueur (si masse linéique connue).
  ◦ Longueur et largeur (si masse surfacique connue).

- La densité expérimentale des échantillons prélevés :
  ◦ Mesures de masse dans l'air et dans l'eau.

- La mesure du taux de fibres est déterminée selon ISO 1172 :1999 ou par analyse thermogravimétrique (ATG) telle que déterminé par exemple dans le document B. Benzler, Applikationslabor, Mettler Toledo, Giesen, UserCom 1/2001. La mesure du taux de fibres de carbone peut être déterminée selon ISO 14127 :2008.

Détermination du taux de fibres massique théorique :

a) Détermination du taux de fibres massique théorique :

$$\%Mf_{th} = \frac{m_l \cdot L}{Me_{air}}$$

Avec

$m_l$ la masse linéique de la tape,
$L$ la longueur de l'échantillon et
$Me_{air}$ la masse de l'échantillon mesuré dans l'air.

La variation du taux massique de fibres est supposée être directement liée à une variation du taux de matrice sans prendre en compte la variation de la quantité des fibres dans le renfort.
b) Détermination de la densité théorique :

$$d_{th} = \frac{1}{\dfrac{1 - \%Mf_{th}}{d_m} + \dfrac{\%Mf_{th}}{d_f}}$$

Avec $d_m$ et $d_f$ les densités respectives de la matrice et des fibres.
La densité théorique ainsi calculée est la densité accessible s'il n'y a aucune porosité dans les échantillons.
c) Evaluation de la porosité :
La porosité est alors l'écart relatif entre densité théorique et densité expérimentale.

## Revendications

1. Procédé de fabrication d'un matériau fibreux pré-imprégné comprenant un matériau fibreux en fibres continues et au moins une matrice polymère thermoplastique, ledit matériau fibreux pré-imprégné étant réalisé en un ruban unique unidirectionnel ou en une pluralité de rubans parallèles unidirectionnels et ledit procédé comprenant une étape d'imprégnation, en particulier à cœur et homogène, dudit matériau fibreux se présentant sous forme d'une mèche (81a) ou de plusieurs mèches parallèles par ladite au moins une matrice polymère thermoplastique se présentant sous forme de poudre, ladite étape d'imprégnation étant effectuée par voie sèche dans une cuve (20) et le contrôle du taux de ladite au moins une matrice polymère thermoplastique dans ledit matériau fibreux étant effectué par contrôle du temps de séjour dudit matériau fibreux dans la poudre, à l'exclusion de tout procédé électrostatique en charge volontaire, le diamètre moyen D50 en volume des particules de poudre de polymère thermoplastique étant compris de 30 à 300 $\mu$m, notamment de 50 à 200 $\mu$m, plus particulièrement de 70 à 200$\mu$m, ladite cuve (20) comprenant un lit fluidisé (22) comprenant au moins une pièce d'embarrage (82), ladite étape d'imprégnation étant effectuée avec épanouissement simultané de ladite mèche (81a) ou desdites mèches entre l'entrée et la sortie dudit lit fluidisé (22) et ladite mèche (81a) ou lesdites mèches étant en contact avec une partie ou la totalité de la surface de ladite au moins une pièce d'embarrage (82).

2. Procédé selon la revendication 1, **caractérisé en ce que** le taux de fibres dans ledit matériau fibreux imprégné est compris de 45 à 65 % en volume, de préférence de 50 à 60% en volume, notamment de 54 à 60%.

3. Procédé selon la revendication 1 ou 2, **caractérisé en ce que** le temps de séjour dans la poudre est compris de 0,01s à 10s, préférentiellement de 0,1s à 5s, et en particulier de 0,1s à 3s.

4. Procédé selon l'une des revendications 1 à 3, **caractérisé en ce que** ledit épanouissement de ladite mèche (81a) ou desdites mèches est effectué au moins au niveau de ladite au moins une pièce d'embarrage (82).

5. Procédé selon l'une des revendications 1 à 4, **caractérisé en ce que** ladite au moins une pièce d'embarrage (82) est un rouleau de compression de forme convexe, concave ou cylindrique.

6. Procédé selon la revendication 5, **caractérisé en ce que** ledit au moins un rouleau de compression est de forme cylindrique et le pourcentage d'épanouissement de ladite mèche (81a) ou desdites mèches entre l'entrée et la sortie dudit lit fluidisé étant compris de 1% à 400%, préférentiellement entre 30% et 400% préférentiellement entre 30% et 150%, préférentiellement entre 50% et 150%.

7. Procédé selon la revendication 6, **caractérisé en ce que** un seul rouleau de compression est présent dans le lit fluidisé (22) et ladite imprégnation est effectuée au niveau de l'angle $\alpha_1$ formé par ladite mèche (81a) ou lesdites mèches entre l'entrée dudit rouleau de compression et la tangente verticale audit rouleau de compression.

8. Procédé selon la revendication 7, **caractérisé en ce que** l'angle $\alpha_1$ est compris de 0 à 89°, préférentiellement 5° à 85°, préférentiellement de 5° à 45°, préférentiellement de 5° à 30°.

9. Procédé selon la revendication 6, **caractérisé en ce que** deux rouleaux de compression $R_1$ et $R_2$ sont présents dans ledit lit fluidisé (22) et ladite imprégnation est effectuée au niveau de l'angle $\alpha_1$ formé par ladite mèche (81a) ou lesdites mèches entre l'entrée dudit rouleau de compression $R_1$ et la tangente verticale audit rouleau de compression et/ou au niveau de l'angle $\alpha_2$ formé par ladite mèche (81a) ou lesdites mèches entre l'entrée dudit rouleau de compression $R_2$ et la tangente verticale audit rouleau de compression $R_2$, ledit rouleau de compression $R_1$ (dans le sens de défilement du procédé) précédant ledit rouleau de compression $R_2$ et ladite mèche (81a) ou lesdites mèche pouvant passer au-dessus ou en dessous du rouleau $R_2$.

10. Procédé selon la revendication 9, **caractérisé en ce que** les deux rouleaux de compression $R_1$ et $R_2$ sont distants de 0,15 mm à la longueur équivalente à la dimension maximale de la cuve (20), préférentiellement distants de 10mm à 50mm et **en ce que** la différence de hauteur entre les deux rouleaux de compression $R_1$ et $R_2$ est comprise de 0 à la hauteur correspondant à la hauteur maximale de la cuve (20) soustraite des diamètres des deux rouleaux de compression, préférentiellement comprise de 0,15mm à la hauteur correspondant à la hauteur maximale de la cuve (20) soustraite des diamètres des deux rouleaux de compression, plus préférentiellement à une différence de hauteur comprise entre 10mm et 300mm, $R_2$ étant le rouleau de compression supérieur.

11. Procédé selon l'une des revendications 1 à 10, **caractérisé en ce qu'**une seule matrice polymère thermoplastique est utilisée et la poudre de polymère thermoplastique est fluidisable.

12. Procédé selon l'une des revendications 1 à 11, **caractérisé en ce qu'**il comprend de plus une étape de mise en forme de ladite mèche (81a) ou desdites mèches parallèles dudit matériau fibreux imprégné, par calandrage au moyen d'au moins une calandre (51, 52, 53) chauffante sous forme de ruban unique unidirectionnel ou d'une pluralité de rubans parallèles unidirectionnels avec, dans ce dernier cas, ladite calandre chauffante comportant une pluralité de gorges (73) de calandrage, de préférence jusqu'à 200 gorges de calandrage, en conformité avec le nombre desdits rubans et avec une pression et/ou un écartement entre les rouleaux de ladite calandre régulés par un système asservi.

13. Procédé selon la revendication 12, **caractérisé en ce que** l'étape de calandrage est réalisée au moyen d'une pluralité de calandres (51, 52, 53) chauffantes, montées en parallèle et/ou en série par rapport au sens de défilement des mèches (81a) de fibres.

14. Procédé selon l'une des revendications 12 ou 13, **caractérisé en ce que** ladite (ou lesdites) calandre(s) chauffante(s) (51, 52, 53) comprend (comprennent) un système de chauffage intégré par induction ou par microondes, de préférence par microondes, couplé à la présence de charges carbonées dans ledit polymère thermoplastique ou mélange de polymères thermoplastiques.

15. Procédé selon l'une des revendications 12 à 14, **caractérisé en ce que** ladite (ou lesdites) calandre(s) chauffante(s) (51, 52, 53) est (sont) couplée(s) à un dispositif de chauffage complémentaire rapide (41, 42, 43), situé avant et/ou après ladite (chaque) calandre (51, 52, 53), en particulier un dispositif de chauffage par microondes ou induction couplé à la présence de charges carbonées dans ledit polymère ou dans ledit mélange de polymères, ou un dispositif de chauffage infrarouge IR, ou Laser ou par contact direct avec une autre source de chaleur comme une flamme ou un gaz chaud.

16. Procédé selon l'une des revendications 1 à 15, **caractérisé en ce que** ladite ou lesdites étape(s) d'imprégnation est(sont) complétée(s) par une étape de recouvrement de ladite mèche (81a) unique ou de ladite pluralité de mèches parallèles après imprégnation par la poudre, ladite étape de recouvrement étant réalisée avant ladite étape de calandrage, par un polymère thermoplastique fondu, pouvant être identique ou différent dudit polymère sous forme de poudre en lit fluidisé (22), ledit polymère fondu étant de préférence de même nature que ledit polymère sous forme de poudre en lit fluidisé (22), de préférence avec ledit recouvrement s'effectuant par extrusion en tête d'équerre par rapport à ladite mèche (81a) unique ou à ladite pluralité de mèches parallèles.

17. Procédé selon l'une des revendications 1 à 16, **caractérisé en ce que** ledit polymère thermoplastique comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges.

18. Procédé selon l'une des revendications 1 à 17, **caractérisé en ce que** le dit polymère thermoplastique comprend en outre des polymères à cristaux liquides ou du poly(butylène téréphtalate) cyclisé, ou des mélanges en contenant comme additifs.

19. Procédé selon l'une des revendications 1 à 18, **caractérisé en ce que** ledit au moins polymère thermoplastique est sélectionné parmi : les polyaryl éther cétones (PAEK), en particulier le poly(éther éther cétone) (PEEK) ; les polyaryl éther cétone cétone (PAEKK), en particulier le poly(éther cétone cétone) (PEKK) ; les polyéther-imides (PEI) aromatiques ; les polyaryl sulfones, en particulier les polyphénylène sulfones (PPSU) ; les polyarylsulfures, en particulier les polyphénylène sulfures (PPS) ; les polyamides (PA), en particulier polyamides aromatiques éventuellement modifiées par unités urées ; les PEBA, les polyacrylates en particulier le polyméthacrylate de méthyle (PMMA) ; les polyoléfines, en particulier le polypropylène, l'acide polylactique (PLA), l'alcool polyvinylique (PVA), et les polymères fluorés en particulier le polyfluorure de vinylidène (PVDF) ou le polytetrafluoroéthylène (PTFE) ou le polychlorotrifluoroéthylène (PCTFE); et leurs mélanges, notamment un mélange de PEKK et de PEI, de préférence de 90-10% en poids à 60-40% en poids, en particulier de 90-10% en poids à 70-30% en poids.

20. Procédé selon la revendication 19, **caractérisé en ce que** ledit au moins polymère thermoplastique est un polymère dont la température de transition vitreuse est telle que $Tg \geq 80°C$ ou un polymère semi-cristallin dont la température de fusion $Tf \geq 150°C$.

21. Procédé selon l'une des revendications 1 à 20, **caractérisé en ce que** ledit matériau fibreux comprend des fibres continues sélectionnées parmi les fibres de carbone, de verre, de carbure de silicium, de basalte, de silice, les fibres naturelles en particulier de lin ou de chanvre, de lignine, de bambou, de sisal, de soie, ou cellulosiques en particulier de viscose, ou les fibres thermoplastiques amorphes de température de transition vitreuse Tg supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou les fibres thermoplastiques semi-cristallines de température de fusion Tf supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou un mélange de deux ou de plusieurs desdites fibres, de préférence un mélange de fibres de carbone, de verre ou de carbure de silicium, en particulier des fibres de carbone.

22. Ruban unidirectionnel de matériau fibreux pré-imprégné, en particulier ruban enroulé sur bobine, **caractérisé en ce qu'**il est obtenu par un procédé tel que défini selon l'une des revendications 1 à 21.

23. Ruban selon la revendication 22, **caractérisé en ce qu'**il a une largeur (l) et une épaisseur (ep) adaptées à une dépose par robot dans la fabrication de pièces en trois dimensions, sans besoin de refente, et de préférence a une largeur (l) d'au moins 5 mm et pouvant aller jusqu'à 400mm, de préférence comprise entre 5 et 50 mm et de manière encore plus préférée comprise entre 5 et 15mm.

24. Ruban selon l'une des revendications 22 ou 23, **caractérisé en ce que** le polymère thermoplastique est un polyamide choisi parmi notamment un polyamide aliphatique tel que PA 11, PA 12, 11/1010 ou 12/1010 ou un polyamide semi-aromatique choisi parmi PA 11/10T, PA 11/6T/10T, PA MXDT/10T, PA MPMDT/10T et PA BACT/10T.

**25.** Utilisation du procédé tel que défini selon l'une des revendications 1 à 21, pour la fabrication de rubans calibrés adaptés à la fabrication de pièces composites en trois dimensions, par dépose automatique desdits rubans au moyen d'un robot.

**26.** Utilisation du ruban de matériau fibreux pré-imprégné, tel que défini selon l'une des revendications 22 à 24, dans la fabrication de pièces composites en trois dimensions.

**27.** Utilisation selon la revendication 26, **caractérisée en ce que** ladite fabrication desdites pièces composites concerne les domaines des transports, en particulier automobile, du pétrole et du gaz, en particulier l'offshore, du stockage de gaz, aéronautique civile ou militaire, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical, de la balistique avec pièces pour arme ou missile, de la sécurité et de l'électronique.

**28.** Pièce composite en trois dimensions, **caractérisée en ce qu'**elle résulte de l'utilisation d'au moins un ruban unidirectionnel de matériau fibreux pré imprégné tel que défini selon l'une des revendications 22 à 24.


**Patentansprüche**

**1.** Verfahren zur Herstellung eines Prepreg-Fasermaterials, umfassend ein Fasermaterial aus Endlosfasern und mindestens einer thermoplastischen Polymermatrix, wobei das Prepreg-Fasermaterial in einem einzelnen unidirektionalen Band oder in einer Vielzahl von parallelen unidirektionalen Bändern hergestellt wird, und das Verfahren einen Imprägnierungsschritt umfasst, besonders mittig und gleichmäßig, wobei das Fasermaterial in Form eines Faserbandes (81a) oder mehrerer paralleler Faserbänder durch die mindestens eine thermoplastische Polymermatrix in Pulverform vorliegt, wobei der Imprägnierungsschritt nach einem Trockenverfahren in einem Tank (20) durchgeführt wird und die Steuerung der Geschwindigkeit der mindestens einen thermoplastischen Polymermatrix in dem Fasermaterial durch die Steuerung der Verweilzeit des Fasermaterials in dem Pulver durchgeführt wird, unter Ausgrenzung jeglichen elektrostatischen Prozesses mit freiwilliger Ladung, wobei der durchschnittliche Durchmesser D50 des Volumens der Partikel aus thermoplastischem Polymerpulver in dem Bereich zwischen 30 bis 300 $\mu$m liegt, besonders zwischen 50 bis 200 $\mu$m, insbesondere zwischen 70 bis 200 $\mu$m, wobei der Tank (20) ein Wirbelbett (22) umfasst, das mindestens ein Spannstück (82) umfasst, wobei der Imprägnierungsschritt bei gleichzeitiger Entwicklung des Faserbands (81a) oder der Faserbänder zwischen dem Einlass und dem Auslass des Wirbelbettes (22) ausgeführt wird, und das Faserband (81a) oder die Faserbänder in Verbindung mit einem Teil oder der Gesamtheit der Oberfläche des mindestens einen Spannstücks (82) stehen.

**2.** Verfahren nach Anspruch 1, **dadurch gekennzeichnet, dass** der Fasergehalt in dem imprägnierten Fasermaterial im Bereich zwischen 45 bis 65 Vol.-%, vorzugsweise zwischen 50 bis 60 Vol.-%, besonders zwischen 54 bis 60 Vol.-%, liegt.

**3.** Verfahren nach Anspruch 1 oder 2, **dadurch gekennzeichnet, dass** die Verweilzeit im Pulver im Bereich zwischen 0,01 s bis 10 s, vorzugsweise zwischen 0,1 s bis 5 s und besonders zwischen 0,1 s bis 3 s liegt.

**4.** Verfahren nach einem der Ansprüche 1 bis 3, **dadurch gekennzeichnet, dass** die Entwicklung des Faserbands (81a) oder der Faserbänder mindestens auf der Ebene des mindestens einen Spannstücks (82) durchgeführt wird.

**5.** Verfahren nach einem der Ansprüche 1 bis 4, **dadurch gekennzeichnet, dass** das mindestens eine Spannstück (82) eine Kompressionswalze konvexer, konkaver oder zylindrischer Form ist.

**6.** Verfahren nach Anspruch 5, **dadurch gekennzeichnet, dass** die mindestens eine Kompressionswalze eine zylindrische Form aufweist und der Prozentsatz der Entwicklung des Faserbands (81a) oder der Faserbänder zwischen dem Einlass und dem Auslass des Wirbelbettes im Bereich zwischen 1 % bis 400 %, vorzugsweise zwischen 30 % und 400 %, vorzugsweise zwischen 30 % und 150 %, vorzugsweise zwischen 50 % und 150 % liegt.

**7.** Verfahren nach Anspruch 6, **dadurch gekennzeichnet, dass** eine einzelne Kompressionswalze in dem Wirbelbett (22) vorhanden ist und die Imprägnierung in dem Winkel $\alpha_1$ durchgeführt wird, der durch das Faserband (81a) oder die Faserbänder zwischen dem Einlass der Kompressionswalze und der vertikalen Tangente an die Kompressionswalze gebildet wird.

8. Verfahren nach Anspruch 7, **dadurch gekennzeichnet, dass** der Winkel $\alpha_1$ im Bereich zwischen 0 und 89°, vorzugsweise zwischen 5° und 85°, vorzugsweise zwischen 5° und 45°, vorzugsweise zwischen 5° und 30° liegt.

9. Verfahren nach Anspruch 6, **dadurch gekennzeichnet, dass** zwei Kompressionswalzen $R_1$ et $R_2$ in dem Wirbelbett (22) vorhanden sind und die Imprägnierung in dem Winkel $\alpha_1$, der durch das Faserband (81a) oder die Faserbänder zwischen dem Einlass der Kompressionswalze $R_1$ und der vertikalen Tangente an die Kompressionswalze gebildet wird, und/oder in dem Winkel $\alpha_2$, der durch das Faserband (81a) oder die Faserbänder zwischen dem Einlass der Kompressionswalze $R_2$ und der vertikalen Tangente an die Kompressionswalze $R_2$ gebildet wird, ausgeführt, wobei die Kompressionswalze $R_1$ (in Laufrichtung), welche der Kompressionswalze $R_2$ vorgelagert ist, und das Faserband (81a) oder die Faserbänder über oder unter der Walze $R_2$ durchlaufen können.

10. Verfahren nach Anspruch 9, **dadurch gekennzeichnet, dass** die beiden Kompressionswalzen $R_1$ et $R_2$ einen Abstand von 0,15 mm zu der Länge haben, die der maximalen Abmessung des Tanks (20) entspricht, vorzugsweise einen Abstand zwischen 10 mm und 50 mm, und in diesem Abstand der Höhenunterschied zwischen den beiden Kompressionswalzen $R_1$ et $R_2$ in einem Bereich von 0 bis zu der Höhe liegt, die der maximalen Höhe des Tanks (20) entspricht, minus den Durchmessern der beiden Kompressionswalzen, vorzugsweise in einem Bereich von 0,15 mm bis zu der Höhe, die der maximalen Höhe des Tanks (20) entspricht, minus den Durchmessern der beiden Kompressionswalzen, bevorzugter einem Höhenunterschied in dem Bereich zwischen 10 mm und 300 mm, wobei $R_2$ die obere Kompressionswalze ist.

11. Verfahren nach einem der Ansprüche 1 bis 10, **gekennzeichnet dadurch, dass** eine einzelne thermoplastische Polymermatrix verwendet wird und das thermoplastische Polymerpulver fluidisierbar ist.

12. Verfahren nach einem der Ansprüche 1 bis 11, **dadurch gekennzeichnet, dass** es ferner einen Formgebungsschritt des Faserbands (81a) oder der parallelen Faserbänder des imprägnierten Fasermaterials durch Kalandrieren mittels mindestens eines wärmenden Kalanders (51, 52, 53) in Form eines einzelnen unidirektionalen Bandes oder einer Vielzahl von parallelen unidirektionalen Bändern umfasst, wobei im letzten Fall der wärmende Kalander eine Vielzahl von Kalandrierungsrillen (73), vorzugsweise bis zu 200 Kalandrierungsrillen, in Übereinstimmung mit der Anzahl der Bänder und mit einem Druck und/oder einem Abstand zwischen den Walzen des Kalanders, die durch ein Servosystem reguliert werden, umfasst.

13. Verfahren nach Anspruch 12, **dadurch gekennzeichnet, dass** der Kalandrierungsschritt mittels einer Vielzahl von wärmenden Kalandern (51, 52, 53) ausgeführt wird, die bezüglich der Laufrichtung der Faserbänder (81a) aus Fasern parallel und/oder in Reihe montiert sind.

14. Verfahren nach einem der Ansprüche 12 oder 13, **dadurch gekennzeichnet, dass** der (oder die) wärmende(n) Kalander (51, 52, 53) ein integriertes Erwärmungssystem durch Induktion oder durch Mikrowellen, vorzugsweise durch Mikrowellen, gekoppelt an das Vorhandensein von kohlenstoffhaltigen Füllstoffen in dem thermoplastischen Polymer oder der Mischung aus thermoplastischen Polymeren, umfasst (umfassen).

15. Verfahren nach einem der Ansprüche 12 bis 14, **dadurch gekennzeichnet, dass** der (oder die) wärmende(n) Kalander (51, 52, 53) mit (einem) schnellen zusätzlichen Kalander(n) (41, 42, 43) gekoppelt ist (sind), der (die) sich vor und/oder nach dem (jedem) Kalander (51, 52, 53) befindet (befinden), insbesondere eine Erwärmungsvorrichtung durch Mikrowellen oder Induktion, gekoppelt an das Vorhandensein von kohlenstoffhaltigen Füllstoffen in dem Polymer oder in der Mischung aus Polymeren, oder eine Infrarot- (IR) oder Laser-Erwärmungsvorrichtung, oder durch direkten Kontakt mit einer anderen Wärmequelle wie einer Flamme oder einem heißen Gas.

16. Verfahren nach einem der Ansprüche 1 bis 15, **dadurch gekennzeichnet, dass** der oder die Imprägnierungsschritt(e) durch einen Beschichtungsschritt des einzelnen Faserbands (81a) oder der Vielzahl von parallelen Faserbändern nach der Imprägnierung durch das Pulver vervollständigt wird (werden), wobei der Beschichtungsschritt vor dem Kalandrierungsschritt durch ein geschmolzenes thermoplastisches Polymer ausgeführt wird, das mit dem Polymer in Pulverform in einem Wirbelbett (22) identisch oder davon verschieden sein kann, wobei das geschmolzene Polymer vorzugsweise von gleicher Art ist wie das Polymer in Pulverform in einem Wirbelbett (22), wobei die Beschichtung bezogen auf das einzelne Faserband (81a) oder die Vielzahl von parallelen Faserbändern vorzugsweise durch Vierkantkopfextrusion durchgeführt wird.

17. Verfahren nach einem der Ansprüche 1 bis 16, **dadurch gekennzeichnet, dass** das thermoplastische Polymer des Weiteren kohlenstoffhaltige Füllstoffe, besonders Ruß oder kohlenstoffhaltige Nanofüllstoffe, vorzugsweise ausgewählt aus kohlenstoffhaltigen Nanofüllstoffen, besonders Graphenen und/oder Kohlenstoff-Nanoröhrchen und/oder Kohlenstoff-Nanofibrillen oder deren Mischungen, umfasst.

18. Verfahren nach einem der Ansprüche 1 bis 17, **dadurch gekennzeichnet, dass** das thermoplastische Polymer ferner Flüssigkritallpolymere oder cyclisiertes Poly(butylenterephthalat) oder dies enthaltene Mischungen als Additiv umfasst.

19. Verfahren nach einem der Ansprüche 1 bis 18, **dadurch gekennzeichnet, dass** das mindestens eine thermoplastische Polymer gewählt ist aus:

Poly(aryletherketonen) (PAEK), besonders Poly(etheretherketon) (PEEK);
Poly(aryletherketonketon) (PAEKK), besonders Poly(etherketonketon) (PEKK);
aromatischen Polyetherimiden (PEI); Polyarylsulfonen, besonders Polyphenylensulfonen (PPSU); Polyarylsulfiden, besonders Polyphenylensulfiden (PPS); Polyamiden (PA), besonders aromatischen Polyamiden, gegebenenfalls modifiziert durch Harnstoffeinheiten; PEBA, Polyacrylaten, besonders Polymethylmethacrylat (PMMA); Polyolefinen, besonders Polypropylen, Polymilchsäure (PLA), Polyvinylalkohol (PVA) und fluorierten Polymeren, besonders Polyvinylidenfluorid (PVDF) oder Polytetrafluorethylen (PTFE) oder Polychlortrifluorethylen (PCTFE); und deren Mischungen, insbesondere einer Mischung aus PEKK und PEI, vorzugsweise von 90-10 Gew.-% bis 60-40 Gew.-%, besonders von 90-10 Gew.-% bis 70-30 Gew.-%.

20. Verfahren nach Anspruch 19, **dadurch gekennzeichnet, dass** das mindestens thermoplastisches Polymer ein Polymer ist, dessen Glasübergangstemperatur derart ist, dass $Tg \geq 80$ °C ist, oder ein halbkristallines Polymer ist, dessen Schmelztemperatur $Tf \geq 150$ °C ist.

21. Verfahren nach einem der Ansprüche 1 bis 20, **dadurch gekennzeichnet, dass** das Fasermaterial Endlosfasern umfasst, gewählt aus Kohlenstoff-, Glas-, Siliciumcarbid-, Basalt-, Siliciumdioxidfasern, Naturfasern, besonders aus Leinen oder Hanf, Lignin, Bambus, Sisal, Seide oder cellulosischen, besonders Viskose, oder amorphen thermoplastischen Fasern mit einer Glasübergangstemperatur Tg höher als die Tg des Polymers oder der Mischung aus Polymeren, wenn letzteres amorph ist, oder höher als die Tf des Polymers oder der Mischung aus Polymeren, wenn letzteres halbkristallin ist, oder thermoplastischen halbkristallinen Fasern mit Schmelztemperatur Tf höher als die Tg des Polymers oder der Mischung aus Polymeren, wenn letzteres amorph ist, oder höher als die Tf des Polymers oder der Mischung aus Polymeren, wenn letzteres halbkristallin ist, oder einer Mischung aus zwei oder mehreren der Fasern, vorzugsweise einer Mischung aus Kohlenstoff-, Glas- oder Siliciumcarbidfasern, besonders Kohlenstofffasern.

22. Unidirektionales Band aus Prepreg-Fasermaterial, besonders ein auf eine Spule gewickeltes Band, **dadurch gekennzeichnet, dass** es durch ein Verfahren erhalten wird, wie gemäß einem der Ansprüche 1 bis 21 definiert.

23. Band nach Anspruch 22, **dadurch gekennzeichnet, dass** es eine Breite (l) und eine Dicke (ep) aufweist, die zur Entfernung durch einen Roboter bei der Herstellung dreidimensionaler Teile geeignet sind, ohne dass ein Schnitt erforderlich ist, und vorzugsweise eine Breite (l) von mindestens 5 mm und möglicherweise bis zu 400 mm, vorzugsweise zwischen 5 und 50 mm und noch bevorzugter zwischen 5 und 15 mm aufweist.

24. Band nach einem der Ansprüche 22 oder 23, **dadurch gekennzeichnet, dass** das thermoplastische Polymer ein Polyamid ist, das insbesondere aus einem aliphatischen Polyamid wie PA 11, PA 12, 11/1010 oder 12/1010 ausgewählt ist oder aus einem halbaromatischen Polyamid wie PA 11/10T, PA 11/6T/10T, PA MXDT/10T, PA MPMDT/10T und PA BACT/10T ausgewählt ist.

25. Verwendung des Verfahrens nach einem der Ansprüche 1 bis 21 zur Herstellung kalibrierter Bänder, die zur Herstellung dreidimensionaler Verbundteile geeignet sind, durch automatisches Platzieren der Bänder unter Verwendung eines Roboters.

26. Verwendung des Bandes aus Prepreg-Fasermaterial, wie nach einem der Ansprüche 22 bis 24 definiert, bei der Herstellung dreidimensionaler Verbundteile.

27. Verwendung nach Anspruch 26, **dadurch gekennzeichnet, dass** sich die Herstellung der Verbundteile auf die Transportbereiche, besonders Automobile, Öl und Gas, besonders Offshore, Gasspeicher, zivile oder militärische Luftfahrt, Seefahrt, Schiene; auf erneuerbare Energien, besonders Wind, Gezeiten, Energiespeichervorrichtungen, Sonnenkollektoren; auf Wärmeschutzplatten; auf Sport und Freizeit, Gesundheit und Medizin, Ballistik mit Bestandteilen für Waffen oder Raketen, Sicherheit und Elektronik bezieht.

28. Dreidimensionales Verbundmaterial, **dadurch gekennzeichnet, dass** es aus der Verwendung von mindestens einem unidirektionalen Band aus Prepreg-Fasermaterial resultiert, wie nach einem der Ansprüche 22 bis 24 definiert.

**Claims**

1. A method for producing a pre-impregnated fibrous material comprising a fibrous material made of continuous fibers and at least one thermoplastic polymer matrix, said pre-impregnated fibrous material being produced as a single unidirectional tape or a plurality of parallel unidirectional tapes and said method comprising a step of impregnation, in particular full and homogeneous impregnation, of said fibrous material that is in the form of a roving (81a) or of several parallel rovings by said at least one thermoplastic polymer matrix that is in powder form, said impregnation step being carried out via a dry route in a tank (20) and the content of said at least one thermoplastic polymer matrix in said fibrous material being controlled by controlling the residence time of said fibrous material in the powder, with the exception of any electrostatic process with intentional charging, the volume mean diameter D50 of the thermoplastic polymer powder particles being from 30 to 300 $\mu$m, in particular from 50 to 200 $\mu$m, more particularly from 70 to 200 $\mu$m, said tank (20) comprising a fluidized bed (22) comprising at least one spreader part (82), said impregnation step being carried out with simultaneous spreading of said roving (81a) or of said rovings between the inlet and the outlet of said fluidized bed (22) and said roving (81a) or said rovings being in contact with some, or all, of the surface of said at least one spreader part (82).

2. The method according to claim 1, **characterized in that** the fiber content in said impregnated fibrous material is from 45 to 65 % by volume, preferably from 50 to 60 % by volume, in particular from 54 to 60 %.

3. The method according to claim 1 or 2, **characterized in that** the residence time in the powder is from 0.01 to 10 s, preferably from 0.1 to 5 s, and in particular from 0.1 s to 3 s.

4. The method according to one of claims 1 to 3, **characterized in that** said spreading of said roving (81a) or of said rovings is carried out at least at said at least one spreader part (82).

5. The method according to one of claims 1 to 4, **characterized in that** said at least one spreader part (82) is a compression roller with a convex, concave or cylindrical shape.

6. The method according to claim 5, **characterized in that** said at least one compression roller is cylindrical in shape and the spreading percentage of said roving (81a) or of said rovings between the inlet and the outlet of said fluidized bed is from 1 % to 400 %, preferably between 30 % and 400 %, preferably between 30 % and 150 %, preferably between 50 % and 150 %.

7. The method according to claim 6, **characterized in that** a single compression roller is present in the fluidized bed (22) and said impregnation is carried out at the angle $\alpha_1$ formed by said roving (81a) or said rovings between the inlet of said compression roller and the vertical tangent to said compression roller.

8. The method according to claim 7, **characterized in that** the angle $\alpha_1$ is from 0° to 89°, preferably from 5° to 85°, preferably from 5° to 45°, preferably from 5° to 30°.

9. The method according to claim 6, **characterized in that** two compression rollers $R_1$ and $R_2$ are present in said fluidized bed (22) and said impregnation is carried out at the angle $\alpha_1$ formed by said roving (81a) or said rovings between the inlet of said compression roller $R_1$ and the vertical tangent to said compression roller and/or at the angle $\alpha_2$ formed by said roving (81a) or said rovings between the inlet of said compression roller $R_2$ and the vertical tangent to said compression roller $R_2$, said compression roller $R_1$ (in the direction in which the process proceeds) preceding said compression roller $R_2$ and said roving (81a) or said rovings being able to pass above or below the roller $R_2$.

10. The method according to claim 9, **characterized in that** the distance between the two compression rollers $R_1$ and $R_2$ is from 0.15 mm to the length equivalent to the maximum dimension of the tank (20), preferably from 10 mm to 50 mm, and **in that** the height difference between the two compression rollers $R_1$ and $R_2$ is from 0 to the height corresponding to the maximum height of the tank (20) subtracted from the diameters of the two compression rollers, preferably from 0.15 mm to the height corresponding to the maximum height of the tank (20) subtracted from the diameters of the two compression rollers, more preferably to a height difference of between 10 mm and 300 mm, $R_2$ being the upper compression roller.

11. The method according to one of claims 1 to 10, **characterized in that** a single thermoplastic polymer matrix is used and the thermoplastic polymer powder is fluidizable.

12. The method according to one of claims 1 to 11, **characterized in that** it also comprises a step of shaping said roving (81a) or said parallel rovings of said impregnated fibrous material, by calendering using at least one heating calender (51, 52, 53) in the form of a single unidirectional tape or a plurality of parallel unidirectional tapes with, in the latter case, said heating calender comprising a plurality of calendering grooves (73), preferably up to 200 calendering grooves, in accordance with the number of said tapes and with a pressure and/or separation between the rollers of said calender regulated by a closed-loop control system.

13. The method according to claim 12, **characterized in that** the calendering step is carried out using a plurality of heating calenders (51, 52, 53), mounted in parallel and/or in series relative to the direction of passage of the fiber rovings (81a).

14. The method according to one of claims 12 or 13, **characterized in that** said heating calender(s) (51, 52, 53) comprise(s) an integrated induction or microwave heating system, preferably microwave, coupled with the presence of carbon-based fillers in said thermoplastic polymer or mixture of thermoplastic polymers.

15. The method according to one of claims 12 to 14, **characterized in that** said heating calender(s) (51, 52, 53) is (are) coupled to an additional rapid heating device (41, 42, 43), located before and/or after said (each) calender (51, 52, 53), in particular a microwave or induction heating device coupled with the presence of carbon-based fillers in said polymer or in said mixture of polymers, or an infrared IR or laser heating device or a device for heating by direct contact with another source of heat such as a flame or a hot gas.

16. The method according to one of claims 1 to 15, **characterized in that** said impregnation step(s) is (are) supplemented by a step of covering said single roving (81a) or said plurality of parallel rovings after impregnation by the powder, said covering step being carried out before said calendering step, with a molten thermoplastic polymer, which may be identical to or different from said polymer in powder form in fluidized bed (22), said molten polymer preferably being of the same nature as said polymer in powder form in fluidized bed (22), preferably with said covering being effected by crosshead-die extrusion relative to said single roving (81a) or said plurality of parallel rovings.

17. The method according to one of claims 1 to 16, **characterized in that** said thermoplastic polymer further comprises carbon-based fillers, in particular carbon black or carbon nanofillers, preferably selected from carbon-based nanofillers, in particular graphenes and/or carbon nanotubes and/or carbon nanofibrils or mixtures thereof.

18. The method according to one of claims 1 to 17, **characterized in that** said thermoplastic polymer further comprises liquid crystal polymers or cyclized poly(butylene terephthalate), or blends containing these as additives.

19. The method according to one of claims 1 to 18, **characterized in that** said at least one thermoplastic polymer is selected from: polyaryl ether ketones (PAEK), in particular poly(ether ether ketone) (PEEK); polyaryl ether ketone ketones (PAEKK), in particular polyether ketone ketone (PEKK); aromatic polyether imides (PEI); polyaryl sulfones, in particular polyphenylene sulfones (PPSU); polyarylsulfides, in particular polyphenylene sulfides (PPS); polyamides (PA), in particular aromatic polyamides optionally modified by urea units; PEBAs, polyacrylates, in particular polymethyl methacrylate (PMMA); polyolefins, in particular polypropylene, polylactic acid (PLA), polyvinyl alcohol (PVA), and fluorinated polymers, in particular polyvinylidene fluoride (PVDF) or polytetrafluoroethylene (PTFE) or polychlorotrifluoroethylene (PCTFE); and mixtures thereof, in particular a mixture of PEKK and PEI, preferably of 90-10 % by weight to 60-40 % by weight, in particular of 90-10 % by weight to 70-30 % by weight.

20. The method according to claim 19, **characterized in that** said at least one thermoplastic polymer is a polymer whose glass transition temperature is such that $Tg \geq 80\ °C$, or a semi-crystalline polymer whose melting point $Tm \geq 150\ °C$.

21. The method according to one of claims 1 to 20, **characterized in that** said fibrous material comprises continuous fibers selected from carbon, glass, silicon carbide, basalt or silica fibers, natural fibers, in particular flax or hemp, lignin, bamboo, sisal, silk, or cellulose fibers, in particular viscose, or amorphous thermoplastic fibers with a glass transition temperature Tg higher than the Tg of said polymer or said polymer mixture when the latter is amorphous or higher than the Tm of said polymer or said polymer mixture when the latter is semi-crystalline, or the semi-crystalline thermoplastic fibers with a melting point Tm higher than the Tg of said polymer or said polymer mixture when the latter is amorphous or higher than the Tm of said polymer or said polymer mixture when the latter is semi-crystalline, or a mixture of two or more of said fibers, preferably a mixture of carbon, glass or silicon carbide fibers, in particular carbon fibers.

22. A unidirectional tape of pre-impregnated fibrous material, in particular tape wound on a spool, **characterized in that** it is obtained by a method as defined according to one of claims 1 to 21.

23. The tape according to claim 22, **characterized in that** it has a width (l) and thickness (ep) suitable for robot laying in the manufacture of three-dimensional parts, without the need for slitting, and preferably has a width (l) of at least 5 mm and up to 400 mm, preferably between 5 and 50 mm, and even more preferably between 5 and 15 mm.

24. The tape according to one of claims 22 or 23, **characterized in that** the thermoplastic polymer is a polyamide selected in particular from an aliphatic polyamide such as PA 11, PA 12, 11/1010 or 12/1010 or a semi-aromatic polyamide selected from PA 11/10T, PA 11/6T/10T, PA MXDT/10T, PA MPMDT/10T and PA BACT/10T.

25. A use of the method as defined according to one of claims 1 to 21 for the manufacture of calibrated tapes suitable for the manufacture of three-dimensional composite parts, by the automated laying of said tapes by means of a robot.

26. A use of a tape of pre-impregnated fibrous material, as defined according to one of claims 22 to 24, in the manufacture of three-dimensional composite parts.

27. The use according to claim 26, **characterized in that** said manufacture of said composite parts relates to the fields of transportation, in particular automotive, oil and gas, in particular offshore, gas storage, civilian or military aeronautics, naval, railways; renewable energies, in particular wind, tidal, energy storage devices, solar panels; thermal protection panels; sports and recreation, health and medical, ballistics with parts for firearms or missiles, security and electronics.

28. A three-dimensional composite part, **characterized in that** it results from the use of at least one unidirectional tape of pre-impregnated fibrous material as defined according to one of claims 22 to 24.

FIG.1

FIG.2

FIG.3

Angle

$\alpha_1$

Lit fluidisé

Entrée d'air

**FIG.4**

EP 3 393 738 B1

FIG.5

Angle $\alpha_1$

$R_1$

$R_2$

Angle $\alpha_2=0$

Lit fluidisé

Entrée d'air

**FIG.6**

FIG.7

FIG.8

Angle α₁ R₁ R₂ Angle α₂ Lit fluidisé Angle α₃ R₃ Entrée d'air

**FIG.9**

FIG.10

FIG.11

**FIG.12**

**FIG.13**

FIG.14

FIG 15

Fluidisation

Zone de travail

Débit d'air

Umf

Umb

**FIG.16**

FIG.17

**FIG.18**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012066241 A2
- EP 0324680 A
- US 4541884 A
- EP 0406067 A
- EP 0201367 A
- WO 2016062896 A
- WO 2008135663 A

- EP 2586585 A
- US 20020197397 A
- WO 2015121583 A
- FR 2600585
- EP 0335186 A
- WO 9220521 A
- EP 1505099 A

**Littérature non-brevet citée dans la description**

- **MILLER et al.** Imprégnation techniques for thermoplastic matrix composites. *Polymers and polymer composites, Rapra Technology,* 01 Janvier 1996, vol. 4 (7), 459-481